# EUROPEAN PATENT APPLICATION

(11) **EP 4 703 895 A1**
(43) Date of publication of application: **04.03.2026**
(21) Application number: 25195895.5
(22) Date of filing: 14.08.2025
(51) Int. Cl.: G06F 11/34, G06Q 10/0639, G06Q 10/067

(54) **EVALUATING COMPUTER REPRESENTATIONS OF COMPUTER-IMPLEMENTED SETS OF OPERATIONS**

(30) Priority: 26.08.2024 US 202418815052
(71) Applicant: SAP SE, 69190 Walldorf (DE)
(72) Inventor: Agam, Ron, Walldorf (DE); Baier, Stephan, Walldorf (DE); Berg, Gregor, Walldorf (DE); Cramer, Alexander, Walldorf (DE); Eickhoff, David, Walldorf (DE); Kampik, Timotheus, Walldorf (DE)
(74) Representative: Müller-Boré & Partner Patentanwälte PartG mbB

(57) **Abstract**

The present disclosure provides techniques and solutions for benchmarking process models by evaluating characteristics of the model, such as those reflecting model complexity. Metrics can include the number of elements in a model, the number of roles, and the number of handoffs between roles, as a few examples. Metrics for a model can be compared with reference metrics, such as those calculated from a set of other models, which can be for the same modeled process or different processes. Collections of process models can be evaluated in a similar manner, including for a set of related models that may be expressed at different levels of specificity. Metrics for individual models in the collection can be evaluated and aggregated, and then compared with aggregated metric values of other model collections, for the same or different modeled processes.

## Description

### FIELD

The present disclosure generally relates to analyzing computer representations of process models using information contained within such representations.

### BACKGROUND

Enterprise-level software is critical to the operation of modern businesses, and includes complex software systems for performing operations in areas such as enterprise resource planning (ERP), customer relations management, capturing transactional information, or controlling manufacturing processes. While the software may be used in the operation of a business, the software is technically complex and is used to process huge volumes of data. In addition to resources needed to program and maintain the software, and significant amounts of computing resources such as processors, memory, and storage, significant effort can be required to configure software for a particular purpose.

As one example, software can help track processes, including to determine how the entity is operating, which can include tracking various performance measures and comparing them to targets or benchmarks. In some cases, automatic process discovery techniques can be used, while in other cases processes can be at least partially manually defined.

Automated process discovery often uses advanced data analytics techniques to extract, visualize, and analyze event logs, transaction records, and system interactions. However, the execution of automated process mining can be a resource-intensive endeavor, both in terms of time and computing resources. The process typically involves the collection and preprocessing of large volumes of event data from disparate sources, which can require significant time and effort to ensure data quality, completeness, and consistency. Additionally, the computational complexity of process mining algorithms, such as process discovery, conformance checking, and performance analysis, may demand substantial computing resources.

Thus, while it can be useful to analyze business processes that are operationally connected to enterprise software application, including in some cases comparing processes of one organization to processes of another organization or a collection of organizations, actually performing the analysis can be complex and computationally expensive to implement. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for benchmarking process models by evaluating characteristics of the model, such as those reflecting model complexity. Metrics can include the number of elements in a model, the number of roles, and the number of handoffs between roles, as a few examples. Metrics for a model can be compared with reference metrics, such as those calculated from a set of other models, which can be for the same modeled process or different processes. Collections of process models can be evaluated in a similar manner, including for a set of related models that may be expressed at different levels of specificity. Metrics for individual models in the collection can be evaluated and aggregated, and then compared with aggregated metric values of other model collections, for the same or different modeled processes.

In one aspect, the present disclosure provides a process of comparing metric values determined for a model of set of operations (such as a process model schema) with reference metric values. A request is received to analyze a computer representation of a model of a set of a plurality of operations. The request includes an identifier for the computer representation of the model. A computer representation of the model is retrieved. The computer representation of the model specifies elements of the model and their dependencies.

For each of a plurality of computer-implemented functions, a respective function is called with one or more arguments that include at least a portion of the data of the set of the plurality of operations. The plurality of computer-implemented functions thus correspond to calculations for a plurality of metrics and where the plurality of computer-implemented functions calculate corresponding metric values.

From each of the plurality of computer-implemented functions, a metric value for a metric generated using the respective computer-implemented function is received. For each of the plurality of metrics, a respective reference value specified for a given metric of the plurality of metrics is received. At least a portion of the metric values and reference values are rendered on a user interface.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram illustrating a workspace that includes multiple hierarchically arranged process models.
FIG. 2 is a diagram illustrating an example process model.
FIG. 3 is a diagram of a process model evaluation process.
FIG. 4 is an example report that can be provided using disclosed techniques.
FIG. 5 provides an example process model and associated performance metrics.
FIGS. 6A-6E provide an example JSON listing for the process model of FIG. 5.
FIGS. 7A-7Y provide example code for implementing disclosed techniques.
FIG. 8 is a flowchart of an example process of comparing metric values determined for a model of set of operations (such as a process model schema) with reference metric values.
FIG. 9 is a diagram of an example computing system in which some described embodiments can be implemented.
FIG. 10 is an example cloud computing environment that can be used in conjunction with the technologies described herein.

### DETAILED DESCRIPTION

### Example 1- Overview

Enterprise-level software is critical to the operation of modern businesses, and includes complex software systems for performing operations in areas such as enterprise resource planning (ERP), customer relations management, capturing transactional information, or controlling manufacturing processes. While the software may be used in the operation of a business, the software is technically complex and is used to process huge volumes of data. In addition to resources needed to program and maintain the software, and significant amounts of computing resources such as processors, memory, and storage, significant effort can be required to configure software for a particular purpose.

As one example, software can help track processes, including to determine how the entity is operating, which can include tracking various performance measures and comparing them to targets or benchmarks. In some cases, automatic process discovery techniques can be used, while in other cases processes can be at least partially manually defined.

Automated process discovery often uses advanced data analytics techniques to extract, visualize, and analyze event logs, transaction records, and system interactions. However, the execution of automated process mining can be a resource-intensive endeavor, both in terms of time and computing resources. The process typically involves the collection and preprocessing of large volumes of event data from disparate sources, which can require significant time and effort to ensure data quality, completeness, and consistency. Additionally, the computational complexity of process mining algorithms, such as process discovery, conformance checking, and performance analysis, may demand substantial computing resources.

Thus, while it can be useful to analyze business processes that are operationally connected to enterprise software application, including in some cases comparing processes of one organization to processes of another organization or a collection of organizations, actually performing the analysis can be complex and computationally expensive to implement. Accordingly, room for improvement exists.

The present disclosure provides techniques that can be useful in evaluating and comparing process by looking at higher-level features of a process model (also referred to as a model of a set of operations, such as the operations making up the process). That is, rather than looking at information such as specific tasks or events in a process model, or data corresponding to these tasks or events from actual execution of these events (such as reflected in database entries created or modified during the performance of the process), features of the model as a model can be determined and analyzed. The features can include the number of elements in a model (where the elements correspond to operations in the set of operations of a process model), a degree of nesting (such as reflecting subprocesses), or a number of handovers between different software system or user roles can provide useful information that can assist in determining whether, or how, a process model might be improved, with corresponding benefits in the operation of the organization, but also in terms of reducing a volume of data, a volume of data processing, or computational complexity.

Metrics for process models, or a set of process models, can be evaluated using various rules or measured against standards. They can also be compared with other process models, including models of other organizations or information regarding a collection of models of other organizations.

Metrics for process models can be linked to performance metrics associated with a process model. For example, a particular process may be associated with an average time to complete the process, or times to transition between particular elements of the process model. Linking these performance metrics to process models and their metrics can help evaluate whether some model metrics are associated with better or worse performance, which can be used in determining how a process model might be modified to be more performant. As an example, process models with fewer handovers between roles or software applications may be more performant than process models with a greater number of such handovers. This information can thus suggest that efforts to reduce handovers may result in a more performant process model. Further processes can optionally be carried out to determine at a more granular level how one process might be modified to be more similar to another process, at least in terms of performance.

A user can be presented with a variety of information regarding process model characteristics, benchmarks, and performance. In response, a user can modify a process model, such as using a user interface. For example, the user can make a change to the process model to decrease its complexity.

### Example 2- Example Benchmark Types

The present disclosure provides for a variety of different types of metrics that can be used to evaluate ("benchmark") process models. Some metrics can be considered as process-agnostic. These metrics focus on high-level features of a model, such as its complexity, quality, use, or perceived usefulness. These features can in turn be measured using more granular metrics. For example, a number of elements or a number of handovers can be used as measures of model complexity. Other metrics include a number of changes to a process model or its components, a number of users who have edited the process model, or a number of times the process model was viewed (for example, using a counter that increments whenever a file for the process model is retrieved from data storage).

Values for these metrics for a particular model can then be compared with values from other models, or statistics determined from a collection of models. It can be determined, for example, that a model being evaluated is associated with five different roles, which is higher than 64% of other models, without consideration of what process the model represents (which is why they can be considered process-agnostic).

Metrics can also be considered in a process-specific manner. The metrics used can overlap with the process-agnostic metric, but now the comparison is made between models that represent, semantically, the same process. In some cases, two processes can be considered to be the "same" if they share at least one process output. More generally, two processes can be considered to be semantically equivalent if they serve the same business purpose. For example, two lead-to-cash processes are semantically equivalent, even if the operations in the processes differ, or are performed in a different order.

While process models can be evaluated individually, collections of process models can also be evaluated. For example, it may be useful to see how a collection of process models of a manufacturing unit of one organization compares with process models of a manufacturing unit of another organization, or metrics determined from a collection of organizations. As an example, such an analysis may reveal that one organization has a significantly higher number of roles than manufacturing units of other organizations, which can suggest that the number of roles for the organization can be reduced, and the process models correspondingly simplified.

Again, aspects of process models, such as "roles," are not simply aspects of analog business processes - human beings who are assigned different roles. Roles are also reflected in computing processes, where features and rules for roles are defined in computing code and assigned to computer representations of employees, for example. When processes are performed or analyzed, information regarding rules needs to be retrieved and processed, increasing data storage and memory requirements, and resulting in higher computer resource use.

### Example 3- Example Process Models and Process Model Collections

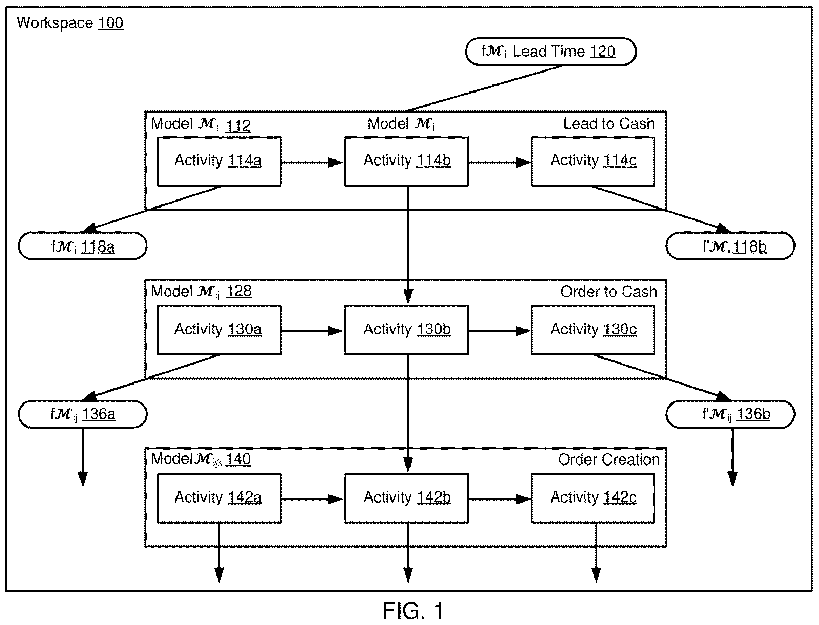

FIG. 1 illustrates an overall workspace 100 for process models, such as corresponding to a general domain or area of operation of a company. For such a domain, models are often created at different hierarchical levels, where process models at higher levels of the hierarchy may provide a higher-level view of a process, and where process models at lower levels provide further details about elements of the higher-level processes, and where a lowest level process model includes detailed operations that are performed in carrying out a process.

This scenario is illustrated in FIG. 1, where the workspace 100 illustrates a highest-level model 112, which has activities 114a-114c. Aspects of the model 112 can be analyzed, such as to determine characteristics of the model such as a number of roles, activities, decision points, process splits or other features. In FIG. 1, this is illustrated by functions 118a, 118b, that are associated with activities 114a, 114c of the model 112. Functions 118a, 118b can in some cases determine performance metrics for the model 112, such as determining an automation rate using function 118a and determining a number of exceptions, using function 118b.

FIG. 1 also illustrates that metrics for the overall model 112 can be determined, in addition to determining metrics for particular activities 114a-114c of the model. Specifically, a function 120 calculates a lead time for the process model 112, which can be defined as a time taken from when a sales lead is identified to when the order is completed (the "cash" in a lead to cash process).

An intermediate model 128 includes activities 130a-130c. The intermediate model 128 provides a more granular description of the activity 114b of the process 112. The model 128 can also be associated with functions 136a, 136b to obtain metrics about the process model or elements of the process model. At the lowest level of the hierarchy, model 140 provides more granular details regarding activity 130b of the model 128. Although not shown in FIG. 1, the model 140 or its elements 142a-142c can be associated with functions to determine metrics.

FIG. 1 also illustrates how models and their properties can be considered individually or in an aggregated manner. For example, information about a number of activities in a model 112, 128, 140 can considered individually or in comparison with other processes, whether for the same or unrelated processes. The number of activities in the model 112 can be compared with the number of activities in the model 128, or can be compared with a model from outside of the workspace 100, including for a model of a different organization. Alternatively, metrics for two or more of the models 112, 128, 140 can be aggregated, such as evaluating a sum of the activities in the models 112, 128, 140, which can then be analyzed, such as with respect to predetermined thresholds or compared with metrics for other process model collections or aggregations of process model collections (for example, using averages or means calculated from multiple sets of multiple process models).

In a similar manner as process models can be considered without reference to what specifically they represent, or where the specific use case of the process model is considered, process models can be analyzed with or without considering their level in a process model hierarchy, such as the one shown in FIG. 1. In some cases, considering a hierarchical level within a hierarchy can provide more useful results. Often, process models at higher levels of a hierarchy are more general or conceptual than models at lower levels of the hierarchy. Process models at higher hierarchical levels may be less complex than those at lower levels, particularly when information such as roles, handovers, information about software applications or systems, or linked computing objects is included in lower-level models than in higher-level models. Similarly, lower-level models may have more activities or decision points than higher-level models. Thus, it can be seen how results may be less accurate if a process model at a higher conceptual level, which by nature may have fewer activities, is compared with a process model at a lower, more granular level, which by nature may have a larger number of activities.

FIG. 1 is a simplified example for discussing techniques of the present disclosure. In practice, a hierarchy can have more or fewer levels than shown in FIG. 1, and subprocesses and functions for determining metrics can be associated with more than one activity of a particular process model, and the process model or its subprocesses can be associated with multiple metrics.

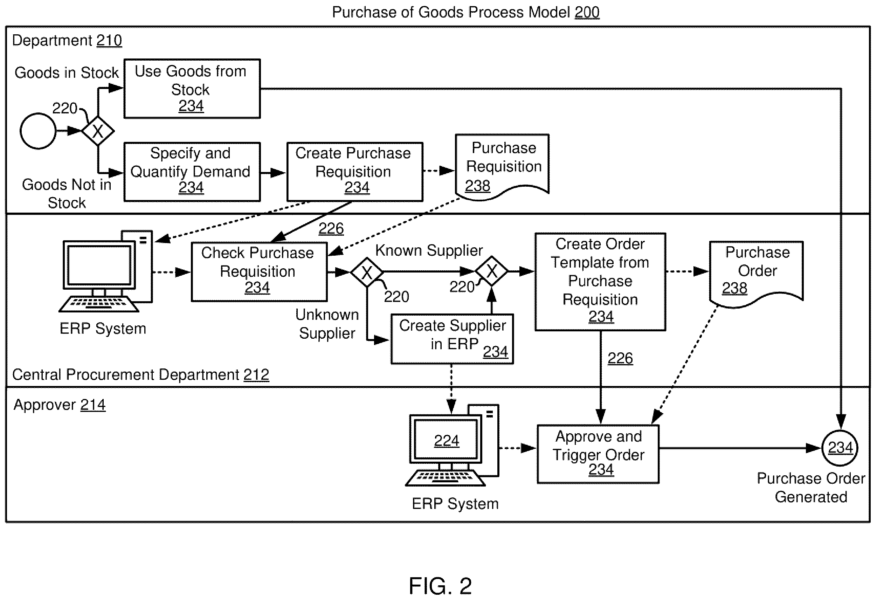

FIG. 2 provides an example process model 200 for a process of generating a purchase order based on goods needed by a department 210. The department 210 is one entity in the process model 200, where the process model also includes a central procurement department 212 for an organization and an approver 214 of the organization. Thus, analysis of the process model 200 indicates that three roles are present. As will be further described, the present disclosure provides computer-implemented techniques for analyzing process models, and the techniques can include code that processes a computer-implemented representation of the process model 200, such as a BPMN (Business Process Model and Notation) representation of the process model, or Unified Modeling Language (UML), in XML or JSON format.

In a similar manner, it can be seen that the process model includes three gateways or decision points 220, an ERP system 224, and two handovers 226. A handover can represent passing control or responsibility for the modelled process between different roles associated with the process. Again, higher numbers of decision points, software applications or computing systems, and handovers can indicate greater model complexity.

Other aspects of the process model 200 can be characterized, such as a number of other types of elements, such as activities 234 or documents or computing objects 238 that are linked to elements of the process model, such as being input or output of a particular activity 234.

In addition to analyzing characteristics of the process model 200, information about the use of the process model can be captured and used in an analysis. For example, the number of times a model is accessed or the number of times the model was edited can be determined and included in an analysis.

### Example 4- Example Process Model Metric Calculations and Benchmarking

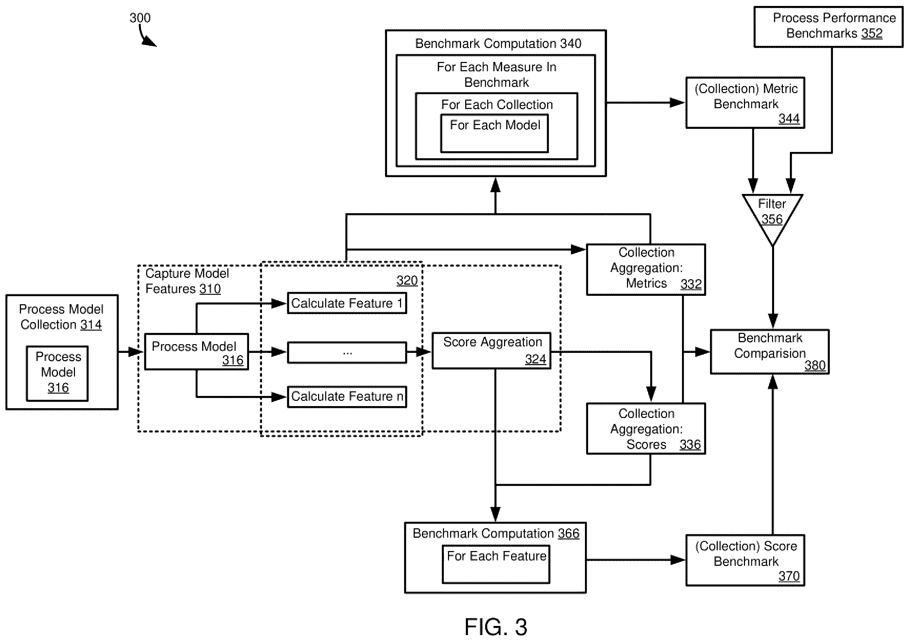

FIG. 3 provides an example process 300 of the present disclosure for analyzing and benchmarking process models. The process 300 can be modified as desired, including omitting operations, adding operations, or reordering operations compared with the order shown in FIG. 3.

Process model features are captured at 310. The features can be captured for individual process models 316 of a collection of process models 314. The process models 316 are provided in a computer-readable format, such as JSON or XML. An example JSON representation of a process model will be provided and described as the disclosure proceeds.

One or more metrics (which can also be referred to as features or measures) are determined from the computer-readable representation of the process model 316 at 320. The complexity of a process model can be quantified using one or more, and typically several, metrics.

One such metric is the number of elements present in the model. In a JSON or XML representation, the number of elements can be determined by counting the number of unique element tags or keys. Elements can be considered in the aggregate, regardless of type, or information can be considered on a more granular basis - such as using totals for each element type.

Elements are fundamental components that define the structure and behavior of the process. They can include activities, events, and gateways. Activities represent specific tasks or work that needs to be done. For example, in a process model for a restaurant, an activity might be "Prepare Food" or "Serve Customer".

Events are occurrences that happen during the course of a process. They typically represent something happening that affects the flow of the process. For example, an event could be "Customer Arrives" or "Order is Ready".

Gateways are decision points that control the divergence and convergence of sequence flows. They can be used to manage and control the flow of the process based on certain conditions. For example, a gateway might be used to decide whether to "Prepare Vegetarian Meal" or "Prepare Non-Vegetarian Meal" based on the customer's preference. In a JSON or XML representation, the number of elements could be determined by counting the number of unique element tags or key, such as in the example below:

```
       {
        "process": {
         "activities": ["Prepare Food", "Serve Customer"],
         "events": ["Customer Arrives", "Order is Ready"],
         "gateways": ["Decide Meal Type"]
        }
       }
```

In this case, the number of elements would be 5, including 2 activities, 2 events, and 1 gateway.

Another metric is the number of roles or participants in the process model. Roles, often represented as swimlanes, define the responsibilities of different participants in the process. Each role typically has its own set of activities that it is responsible for. For example, in a restaurant process model, there might be roles for "Waitstaff', "Chef", and "Cashier", each with their own set of activities. In a JSON or XML representation, roles could be identified by unique identifiers or tags associated with each role. As another example, consider the following JSON representation:

```
       {
        "process": {
         "roles": ["Waitstaff", "Chef", "Cashier"],
         "activities": ["Take Order", "Prepare Food", "Serve Customer"]
        }
       }
```

In this case, there are 3 roles: "Waitstaff", "Chef", and "Cashier".

The number of different IT systems or applications that the process interacts with also contributes to the complexity of the model. This can be quantified by counting the number of unique system or application identifiers in the model. For instance, a process model for an online shopping system might interact with a payment processing system, a customer database, and a shipping API. In a JSON or XML representation, these can be identified by unique tags or keys associated with each system or application, such as in the following example:

```
       {
        "process": {
         "systems": ["Payment Processing System", "Customer Database", "Shipping
       API"],
         "activities": ["Process Payment", "Update Customer Database", "Initiate
       Shipping"]
        }
       }
```

In this case, there are 3 systems: "Payment Processing System", "Customer Database", and "Shipping API".

The number of times control of the process is passed from one role or system to another, known as handovers, is another metric that can be used to measure complexity. This can be determined by counting the number of transition points in the process model. As with elements, handovers can be considered as an aggregate metric using any type of handover, or handovers can be considered by specific handover time. In a JSON or XML representation, transition points can be identified by specific tags or keys that denote a change in control, such as in:

```
       {
        "process": {
         "activities": ["Take Order", "Prepare Food", "Serve Customer"],
         "handovers": [["Waitstaff", "Chef"], ["Chef", "Waitstaff"]]
        }
```

In this case, there are 2 handovers: from "Waitstaff' to "Chef" after the "Take Order" activity, and from "Chef' to "Waitstaff' after the "Prepare Food" activity.

Cyclomatic complexity is a metric that provides a quantitative measure of the complexity of the control flow of a process model. It can be defined as the number of linearly independent paths through the process model. A path is considered linearly independent if it includes at least one edge (or in this case, a transition or sequence flow) that is not included in any other path. In the context of a process model, an edge can be a transition from one activity to another, or from a decision point to an activity.

The control flow of a process model refers to the sequence of activities and decision points that are executed as the process is carried out. The complexity of the control flow can be influenced by factors such as the number of decision points (gateways), the number of activities, and the number of paths that can be taken through the model.

In a JSON or XML representation of a process model, cyclomatic complexity can be calculated by first identifying the number of decision points (gateways). Each decision point typically corresponds to a branch in the control flow, where the process can follow one of several paths. The number of paths that emerge from each decision point can be determined by counting the number of outgoing sequence flows from the decision point. The cyclomatic complexity is then calculated as the number of decision points plus the number of paths, minus one.

For example, consider a simple process model with two decision points and three activities. The first decision point leads to either the first or second activity, and the second decision point leads to either the second or third activity. In this case, the cyclomatic complexity would be 2 (decision points) + 3 (paths) - 1 = 4.

Consider a simple process model represented in JSON as follows:

```
       {
        "process": {
         "activities": ["A1", "A2", "A3"],
         "gateways": [
          {
           "id": "G1",
           "type": "exclusive",
           "outgoing": ["A1", "A2"]
          },
          {
           "id": "G2",
           "type": "exclusive",
           "outgoing": ["A2", "A3"]
          }
         ]
        }
       }
```

In this JSON representation, there are two decision points (gateways), G1 and G2. Each gateway has two outgoing sequence flows, leading to different activities. Therefore, the cyclomatic complexity would be calculated as the number of decision points (2) plus the number of paths (4, two for each gateway) minus one, which equals 5.

The depth of nesting in a process model refers to the maximum depth of nested activities or subprocesses within the model. A subprocess is a process that is defined within another process. Subprocesses can be used to encapsulate a part of a process that is complex or that is repeated multiple times. A high depth of nesting can indicate a complex process with many levels of subprocesses, each of which could potentially have its own set of activities, gateways, and sequence flows.

In a JSON or XML representation of a process model, the depth of nesting can be calculated by identifying the maximum depth of nested element tags or keys. Each activity or subprocess could be represented in the JSON or XML as a unique identifier, and the nesting of activities or subprocesses can be represented by the nesting of these identifiers.

For example, consider a simple process model with a nested subprocess, represented in JSON as follows:

```
       {
        "process": {
         "activities": ["A1", "A2"],
         "subprocesses": [
          {
           "id": "SP1",
           "activities": ["A3", "A4"],
           "subprocesses": [
            {
             "id": "SP2",
             "activities": ["A5", "A6"]
            }
           ]
          }
         ]
        }
       }
```

In this case, the depth of nesting would be 2, as there is a subprocess (SP1) within the main process, and another subprocess (SP2) within SP1.

The degree of connectivity in a process model refers to the average number of connections, or sequence flows, per element in the model. Elements in this context can refer to activities, events, or gateways. A connection, or sequence flow, is a directed relationship between two elements that shows the order in which they are executed or evaluated. This can also be referred to as dependency information.

A high degree of connectivity can indicate a complex process with many interdependencies between elements. For example, in a process model for a manufacturing process, there might be a high degree of connectivity between the various activities involved in assembling a product, as each activity depends on the output of the previous one.

In a JSON or XML representation of a process model, the degree of connectivity can be calculated by counting the number of connections (edges) for each element and dividing by the total number of elements. Each connection can be represented in the JSON or XML as a pair of element identifiers, indicating the source and target of the sequence flow. The total number of elements can be determined by counting the number of unique element identifiers in the JSON or XML.

For example, consider a simple process model with three activities and three sequence flows, represented in JSON as follows:

```
       {
        "activities": ["A1", "A2", "A3"],
        "sequenceFlows": [["A1", "A2"], ["A2", "A3"], ["A3", "A1"]]
       }
```

In this case, the degree of connectivity would be 3 (sequence flows) divided by 3 (activities), or 1.

This measure provides a useful indication of the complexity of the process model, as a higher degree of connectivity generally corresponds to a more complex and potentially more difficult to understand process model, which can also be more computationally expensive to implement.

In the context of a process model, fan-in refers to the number of sequence flows (transitions) that lead into a particular activity or gateway, while fan-out refers to the number of sequence flows that lead out from a particular activity or gateway. A high fan-in or fan-out at a particular point in the process model can indicate a complex decision point with many potential paths.

For example, consider a process model where an activity "Review Document" can be initiated from three different activities: "Write Document", "Edit Document", and "Format Document". In this case, the "Review Document" activity has a fan-in of 3. If the "Review Document" activity can lead to two different activities: "Approve Document" and "Revise Document", then it has a fan-out of 2.

In the following JSON representation of a process model, the fan-in and fan-out for each activity or gateway can be calculated by counting the number of incoming and outgoing sequence flows for each element:

```
       {
        "process": {
         "activities": ["Write Document", "Edit Document", "Format Document",
       "Review Document", "Approve Document", "Revise Document"],
         "sequenceFlows": [["Write Document", "Review Document"], ["Edit
      Document", "Review Document"], ["Format Document", "Review
      Document"], ["Review Document", "Approve Document"], ["Review
      Document", "Revise Document"]]
        }
       }
```

In this case, the "Review Document" activity has a fan-in of 3 and a fan-out of 2.

Interface complexity in a process model refers to the complexity of the interfaces between the process and external systems or roles. An interface in this context can be thought of as a point of interaction between the process and an external system or role. This can include data exchanges, control signals, or any other form of communication or interaction.

The complexity of an interface can be influenced by several factors. One factor is the number of methods or operations that the interface provides. For example, an interface to a customer database might provide methods for adding a customer, updating customer information, deleting a customer, and retrieving customer information. Each of these methods adds to the complexity of the interface.

Another factor is the number of arguments that each method requires. For example, a method for adding a customer might require arguments for the customer's name, address, and phone number. The more arguments a method requires, the more complex the interface is.

In a JSON or XML representation of a process model, the interface complexity can be calculated by identifying the interfaces (connections to external systems or roles) for each element and assessing the complexity of each interface. This can involve counting the number of methods and the number of arguments for each method.

For example, consider a simple process model with an interface to a customer database, represented in JSON as follows:

```
       {
        "interfaces": [
         {
          "name": "CustomerDatabase",
          "methods": [
           {
            "name": "addCustomer",
            "arguments": ["name", "address", "phone"]
           },
           {
            "name": "updateCustomer",
            "arguments": ["id", "name", "address", "phone"]
           },
           {
            "name": "deleteCustomer",
            "arguments": ["id"]
           },
           {
            "name": "getCustomer",
            "arguments": ["id"]
          }
        ]
      }
    ]
   }
```

In this case, the interface complexity can be determined by the number of methods (4) and the total number of arguments (10). This measure provides a useful indication of the complexity of the process model, as a higher interface complexity generally corresponds to a more complex and potentially more difficult to understand, and more resource intensive, process model.

Data complexity in a process model refers to the complexity of the data structures used in the process. Data structures in this context can refer to the types and structures of data that are input to, output from, or manipulated by the activities in the process. This can include simple data types like integers or strings, or more complex structures like arrays or objects (such as classes in an object oriented computing language).

A high data complexity can indicate a complex process with many data dependencies. For example, a process model for a data analysis workflow might involve complex data structures like multi-dimensional arrays or nested objects, and the activities in the process might involve complex operations on these data structures, such as sorting, filtering, or aggregating the data.

In a JSON or XML representation of a process model, the data complexity can be calculated by identifying the complexity of the data structures used in the process. This can involve counting the number of different types of data structures, the depth of nesting of data structures, or the number of fields in each data structure.

For example, consider a simple process model with an activity that takes an array of objects as input, represented in JSON as follows:

```
       {
        "activities": [
         {
          "name": "AnalyzeData",
          "input": [
           {
            "id": 1,
            "values": [1, 2, 3]
           },
           {
            "id": 2,
            "values": [4, 5, 6]
          } ] }
        ] }
```

In this case, the data complexity can be determined by the complexity of the input data structure, which is an array of objects. Each object has an "id" field and a "values" field, which is an array of integers. The depth of nesting is 2 (an array of objects that contain an array), and there are 2 fields in each object.

The control flow complexity, which is the complexity of the control flow, including the number and types of decision points, is another metric that can be used to measure complexity. A high control flow complexity can indicate a complex process with many decision points and potential paths.

In a JSON representation of a process model, the control flow complexity can be represented by identifying the number and types of decision points (gateways) in the process. Each decision point typically corresponds to a branch in the control flow, where the process can follow one of several paths.

For example, consider a simple process model with two decision points and three activities, represented in JSON as follows:

```
       {
        "process": {
         "activities": ["A1", "A2", "A3"],
         "gateways": [
          {
           "type": "exclusive",
           "outgoing": ["A1", "A2"]
          },
          {
           "type": "parallel",
           "outgoing": ["A2", "A3"]
          }
         ]
        }
       }
```

In this case, the control flow complexity would be determined by the number of decision points (2 gateways), and the number of paths that emerge from each decision point (2 paths from the first gateway, and 2 paths from the second gateway). The types of gateways (exclusive and parallel) also contribute to the control flow complexity, as they determine how the process flow is controlled at each decision point.

Resource complexity in a process model refers to the complexity of the resources used in the process. Resources in this context can refer to any entities that are required to carry out the activities in the process. This could include human resources, including their computer representations, such as different roles or participants, as well as non-human resources, such as equipment, materials, or IT systems.

A high resource complexity can indicate a complex process with many resource dependencies. For example, a process model for a manufacturing process might involve a large number of different types of equipment and materials, as well as multiple roles for operating the equipment and handling the materials.

In a JSON or XML representation of a process model, the resource complexity can be calculated by identifying the complexity of the resources used in the process. This can involve counting the number of different types of resources, as well as the number of instances of each resource. Each type of resource and each instance of a resource can be represented in the JSON or XML as a unique identifier.

For example, consider a simple process model for a manufacturing process, represented in JSON as follows:

```
       {
        "process": {
         "activities": ["ManufactureProduct"],
         "resources": {
          "roles": ["Operator", "Supervisor"],
          "equipment": ["Machine1", "Machine2"],
          "materials": ["Material1", "Material2", "Material3"]
         }
        }
       }
```

In this case, the resource complexity can be determined by the number of different types of resources (3 types: roles, equipment, materials), and the number of instances of each resource (2 roles, 2 pieces of equipment, 3 materials).

Returning to the process 300, an aggregate score, such as a single metric value that provides an overall measure of process model complexity, is determined at 324 using two or more of the metrics determined at 320. The method of aggregation can vary, but in one example it involves applying weights to the individual metrics based on their perceived importance, and then summing or averaging the weighted scores.

For example, consider a process model evaluation system that uses three metrics: the number of elements, the number of roles, and the number of IT systems. Each of these metrics is calculated for a given process model, resulting in a score for each metric. The system might assign a weight of 0.5 to the number of elements, 0.3 to the number of roles, and 0.2 to the number of IT systems, reflecting the perceived importance of these metrics.

The weighted scores are then calculated by multiplying each metric score by its weight. For instance, if a process model has a score of 10 for the number of elements, 5 for the number of roles, and 3 for the number of IT systems, the weighted scores would be 5 (10 * 0.5), 1.5 (5 * 0.3), and 0.6 (3 * 0.2), respectively.

The overall score for the process model is then calculated by summing the weighted scores. In this example, the overall score would be 7.1 (5 + 1.5 + 0.6). This overall score provides a single measure of the complexity of the process model, taking into account the different metrics and their weights.

As discussed, it can be useful to compare process models individually, but it can also be useful to compare collections of process models. Accordingly, at 332, the metrics determined at 320 for each model in the process model collection 314 can be aggregated. Optionally, the values for individual process models 316 in the process model collection can be weighted, such as considering a conceptual level/level of granularity associated with the process model. Similarly, one or more aggregation scores for the process model collection can be calculated at 336 using the individual aggregated scored for each process model 316 calculated at 324.

With the metrics and scores calculated, the process models 316 and the process model collection 314 can be benchmarked. Benchmarks can be calculated for metrics, including the metrics 320 for individual process models 316 and the aggregated metrics 332 calculated for the process model collection at 340. The benchmark computation 340 can include benchmarking, for individual metrics, each process model 316 in the collection, using individual process model benchmarks. The benchmark computation 340 can also include benchmarking for individual metrics, the aggregated metrics values for the process model collection 314 using benchmarks that are defined for process model collections. That is, while both individual process models 316 and a process model collection 314 can be benchmarked looking at the metrics calculated at 320 or the aggregated metrics calculated at 332, the benchmark values used for each metric can differ depending on whether the value is for use with individual process models or for use with process model collections.

The output of the calculations at 340 is a set of measure benchmarks 344 which, again, can be for one or both of individual process models 316 or the process model collection 314. The measure benchmarks 344 can be correlated with process performance benchmarks 352. That is, for example, information characterizing the efficiency of a process of a process model 316 can be associated with the benchmarks 344. In addition to benchmarking process model metrics, benchmarking can use process performance benchmarks 352 for other organizations individually or considered in aggregate. Optionally, these process performance benchmarks 352 are filtered at 356 to limit a comparison to "best in class" organizations. That is, as a goal of the process 300 is to provide insights as to how process models may be improved, it can be useful to limit a comparison to process models that exhibit good performance.

In a similar manner as how measure benchmarks are calculated at 340, benchmarks for process model aggregate scores determined for individual process models at 324 or for process model collections at 336 can be calculated at 366. The benchmark can be calculated for each aggregated score, assuming multiple aggregation scores are calculated. The benchmark calculation at 366 results in a set of score benchmarks 370 which, again, can be for one or both of individual process models 316 or process model collections 314.

One or more of the score benchmarks 370, the aggregations of scores 366, the aggregations of measures 332, and the, optionally filtered, metric benchmarks 344, or the process performance benchmarks 352 can be used in providing a benchmark comparison 380.

### Example 5 - Example Use of Process Model Metric Calculations and Benchmarking

To illustrates the process 300, consider an example using the process models provided in FIG. 1, a LeadToCash model, an OrderToCash model, and an OrderCreation model. Each of these models represents a different level of granularity in an overall organizational use case, from the high-level LeadToCash process down to the more detailed OrderCreation process.

Metrics and scores are calculated for the models, as well as for the collection of models. In addition to these metrics, the analysis can consider performance indicators such as the time from lead to cash. For example, if the LeadToCash process has a shorter time from lead to cash compared to the benchmark, it indicates that the process is performing well. On the other hand, if the time is longer, it suggests there may be inefficiencies in the process that could be addressed.

An example LeadToCash process can be represented in JSON format as follows:

```
       {
        "LeadToCash": {
         "elements": ["LeadGeneration", "LeadQualification", "OrderToCash"],
         "roles": ["Sales", "Marketing", "Finance"]
        }
       }
```

This process has 3 elements and 3 roles. The elements represent different stages in the process, while the roles represent different participants or responsibilities. For the LeadToCash process, which is the highest level, assume the benchmarks are 2 for both elements and roles, and 4 for the aggregate score, which is here is simply the total of the individual metrics. The LeadToCash process thus exceeds, is more complex, than the benchmarks for both elements and roles. The aggregate score for LeadToCash is 6 (3 elements + 3 roles), which higher thanthe benchmark. The performance indicator for LeadToCash is 30 days, which is longer than the benchmark of 25 days. Thus, it may be determined that having a higher number of roles or a higher number of elements than the benchmarks contributes to performance metrics that are worse than the benchmark performance indicators, which can correspond to an aggregate determined from a set of best-in-class organizations.

An example OrderToCash process can have a JSON representation of:

```
 {
        "OrderToCash": {
         "elements": ["OrderCreation", "OrderFulfillment", "InvoiceGeneration",
       "PaymentCollection"],
         "roles": ["Sales", "Production", "Finance"]
        }
       }
```

This process has 4 elements and 3 roles. It expands on the OrderToCash element of the LeadToCash process, providing more detail on the steps involved. For the OrderToCash process, which is at a middle level, the benchmarks are 4 for the number of elements and 2 for the number of roles. In some cases, benchmarks values for particular benchmarks can be higher for lower-level processes than for higher level processes, which can reflect expected greater complexity. In other cases, the same benchmark values can be used for all models without considering either the nature of the modelled process or the "level" of the model. In yet further scenarios, benchmarks can be set considering the nature of the process, such as having different benchmarks for a model representing an OrderToCash process compared with a different process. Here, it can be seen that the roles in OrderToCash meets the benchmark, but the number of roles is higher than the benchmark.

Assume that the aggregate benchmark score is 6. For the OrderToCash process, the aggregate score for OrderToCash is 7 (4 elements + 3 roles), which is above the benchmark. The performance indicator for OrderToCash is 20 days, which is longer than the benchmark of 15 days. Here, it can be seen that the higher number of roles may be contributing to the lower performance of the analyzed OrderToCash process as compared with the benchmark.

The OrderCreation process is represented as:

```
       {
        "OrderCreation": {
         "elements": ["ReceiveOrder", "ValidateOrder", "ConfirmOrder"],
         "roles": ["Sales", "CustomerService"]
        }
       }
```

This process has 3 elements and 2 roles. It expands on the OrderCreation element of the OrderToCash process, providing a detailed view of the order creation process. For the OrderCreation process, which is the most granular, assume that the benchmarks are 6 for elements and roles, and 12 for the aggregate score. The aggregate score for OrderCreation is 5 (3 elements + 2 roles), which is below the benchmark. The performance indicator for OrderCreation is 4 days, which is slightly longer than the benchmark of 5 days. This indicates that the OrderToCash process is performing better than the benchmark, which is consistent with its lower complexity compared to the individual metric benchmark values.

For the collection of models, the individual metric values can be summed for the individual models. This provides a total of 10 elements and 8 roles across all models. Assuming that the benchmarks for model collections are 8 for elements and 6 for roles, it can be seen that not just the LeadToCash and OrderToCash processes are individually above the benchmarks, but the collection as a whole is also above a collection benchmark. The overall score for the collection is calculated as the sum of the aggregate scores of the individual models, which is 18. If a benchmark for the overall score is 14, it can be seen that the collection of models analyzed is below this benchmark.

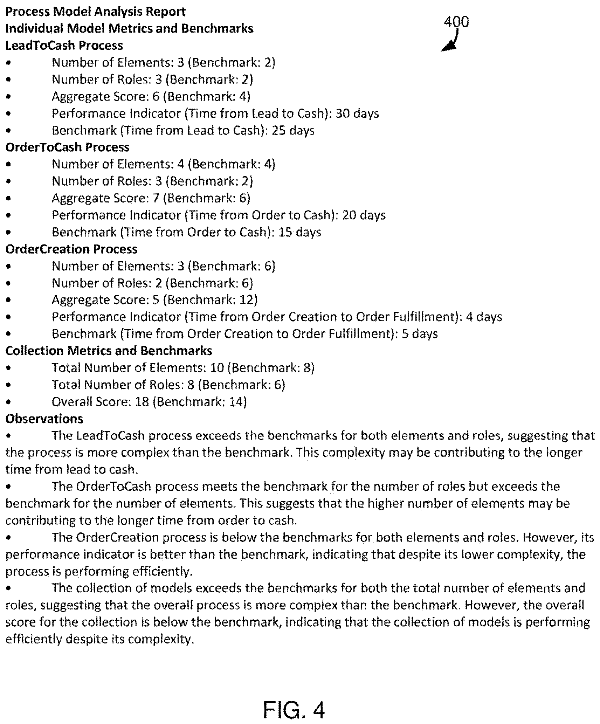

FIG. 4 provides an example report 400 that can correspond to the benchmark comparison provided at 380 of the process 300.

### Example 6- Example Process Model Computer Representation

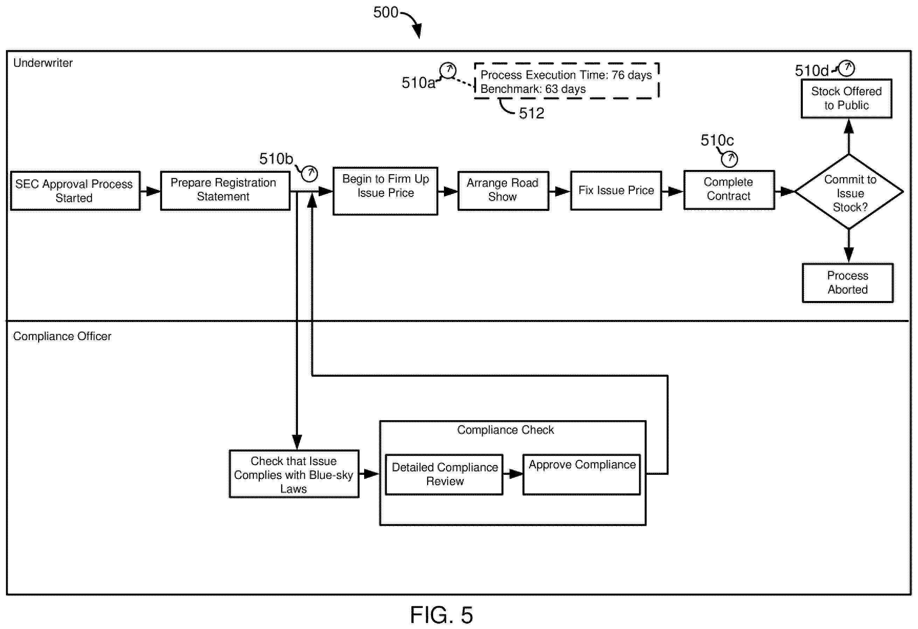

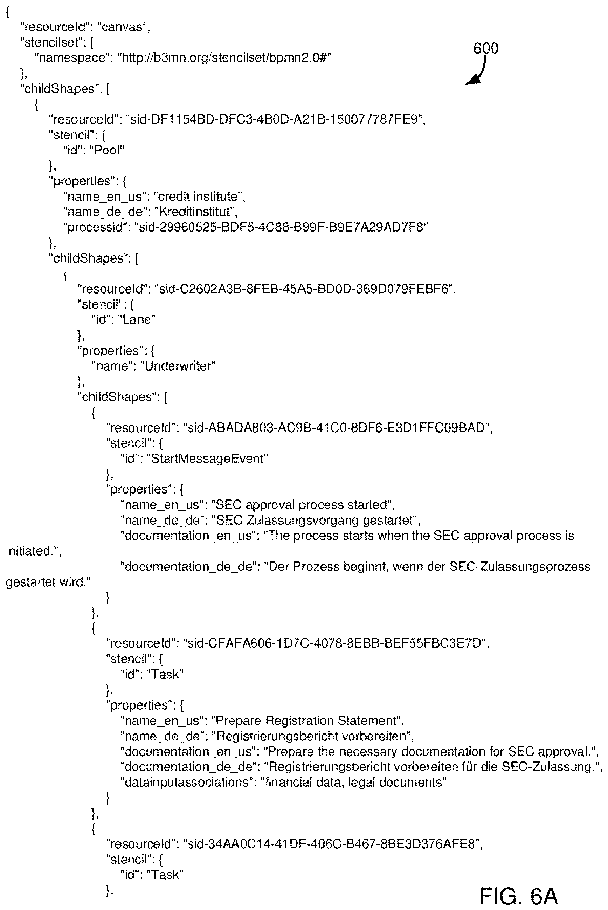

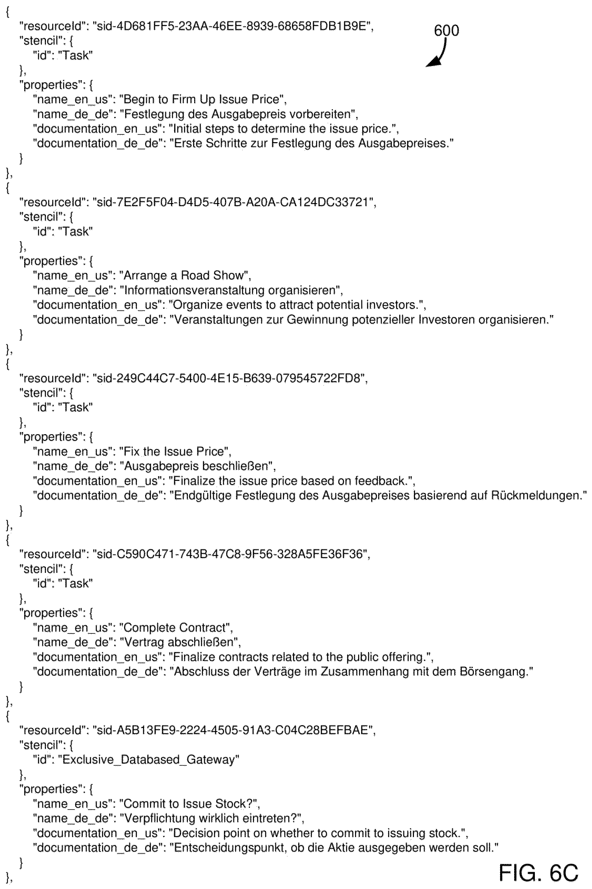

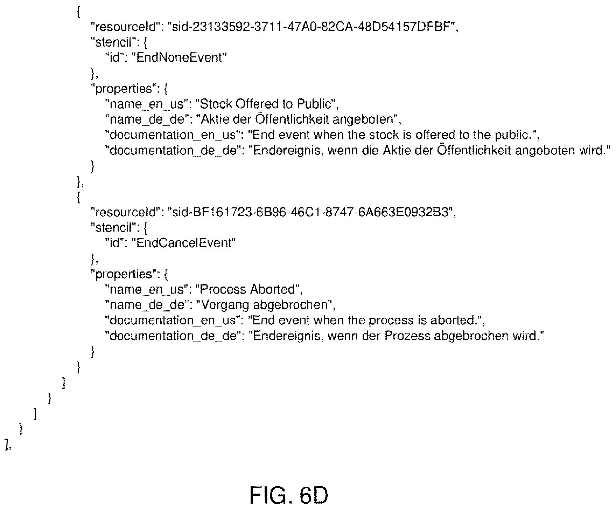

The example of the process 300 discussed in Example 5 is very simple, but illustrates how the disclosed techniques can be implemented. FIG. 5 illustrates a process model 500 for a stock issuance process that is more complex than the simple implementation of the LeadToCash process of Example 3. In particular, the process model 500 includes gateways and handovers. FIGS. 6A-6E provide an example JSON listing 600 for the process model 500, which is an adapted, simplified version of the example process model available at github.com/signavio/bpmn2constraints/blob/main/examples/advanced/underwriter.

The JSON listing 600 defines the overall structure of the BPMN model. Elements, the individual tasks, events, and subprocesses for the process model, are defined within the "childShapes" array of FIG. 6A. For example, the start message event "SEC approval process started" is defined with its properties such as name and documentation:

```
       {
         "resourceId": "sid-ABADA803-AC9B-41C0-8DF6-E3D1FFC09BAD",
         "stencil": {
           "id": "StartMessageEvent"
         },
         "properties": {
           "name_en_us": "SEC approval process started",
           "documentation_en_us": "The process starts when the SEC approval
      process is initiated."
         }
       }
```

Similarly, the task "Prepare Registration Statement" is defined:

```
       {
         "resourceId": "sid-CFAFA606-1D7C-4078-8EBB-BEF55FBC3E7D",
         "stencil": {
           "id": "Task"
         },
         "properties": {
           "name_en_us": "Prepare Registration Statement",
           "documentation_en_us": "Prepare the necessary documentation for SEC
       approval. ",
           "datainputassociations": "financial data, legal documents"
         }
       }
```

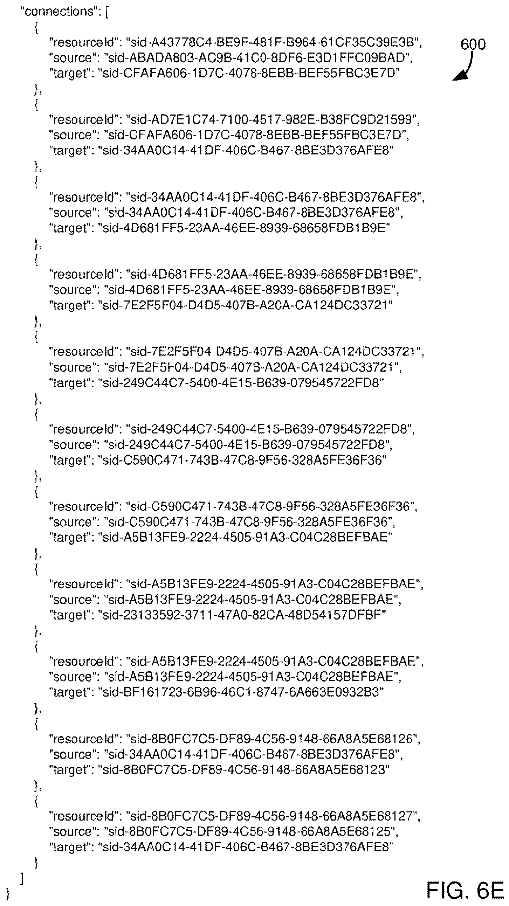

The sequence flows that connect the elements are defined in the "connections" array in FIG. 6E 620. For example, a connection between the start message event and the task "Prepare Registration Statement" is defined:

```
       {
         "resourceId": "sid-A43778C4-BE9F-481F-B964-61CF35C39E3B",
         "source": "sid-ABADA803-AC9B-41C0-8DF6-E3D1FFC09BAD",
         "target": "sid-CFAFA606-1D7C-4078-8EBB-BEF55FBC3E7D"
       }
```

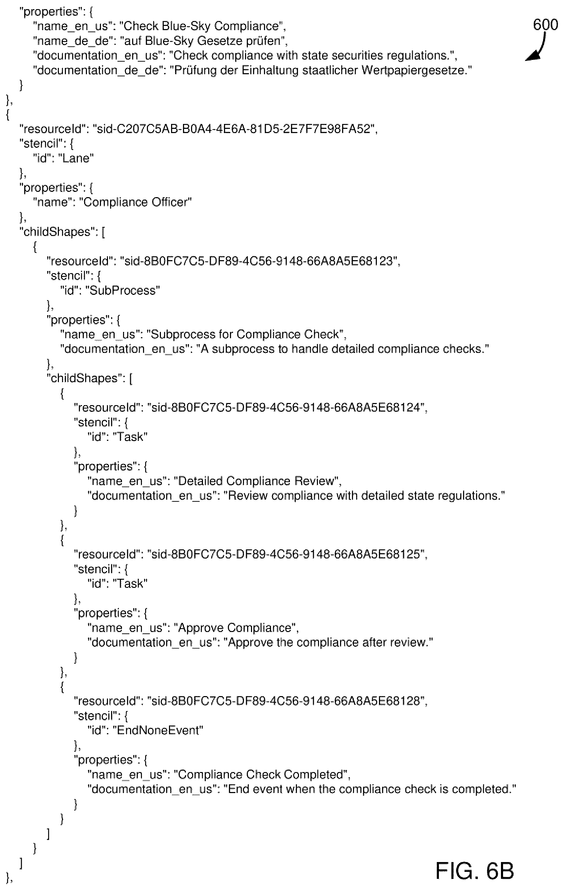

The handovers between roles are implicitly defined by the transitions between tasks in different lanes. In FIG. 6A, the lane "Underwriter" contains tasks like "Prepare Registration Statement", while in FIG. 6B, the lane "Compliance Officer" contains tasks like "Check Blue-Sky Compliance" and the subprocess "Subprocess for Compliance Check": { "resourceId": "sid-C2602A3B-8FEB-45A5-BD0D-369D079FEBF6", "stencil": { "id": "Lane" }, "properties": { "name": "Underwriter" }, "childShapes": [ // Tasks for Underwriter ] { "resourceId": "sid-C207C5AB-B0A4-4E6A-81D5-2E7F7E98FA52", "stencil": { "id": "Lane" }, "properties": { "name": "Compliance Officer" }, "childShapes": [ // Tasks and subprocess for Compliance Officer ] }

References to IT systems are provided in the "documentation" fields for tasks. In FIG. 6A, the task "Prepare Registration Statement" mentions the need for financial data and legal documents, which can be associated with IT systems such as a document management system:

```
       {
         "resourceId": "sid-CFAFA606-1D7C-4078-8EBB-BEF55FBC3E7D",
         "stencil": {
           "id": "Task"
         },
         "properties": {
           "name_en_us": "Prepare Registration Statement",
           "documentation_en_us": "Prepare the necessary documentation for SEC
       approval. ",
           "datainputassociations": "financial data, legal documents"
         }
       }
```

Data input and output associations are specified within the "properties" field of tasks. In FIG. 6A, the task "Prepare Registration Statement" includes data input associations for "financial data" and "legal documents":

```
{
         "resourceId": "sid-CFAFA606-1D7C-4078-8EBB-BEF55FBC3E7D",
         "stencil": {
           "id": "Task"
         },
         "properties": {
           "name_en_us": "Prepare Registration Statement",
           "documentation_en_us": "Prepare the necessary documentation for SEC
       approval. ",
           "datainputassociations": "financial data, legal documents"
         }
       }
```

Subprocesses encapsulate more detailed activities within a larger process. In FIG. 6B, the subprocess "Subprocess for Compliance Check" is defined, containing nested tasks such as "Detailed Compliance Review" and "Approve Compliance":

```
       {
         "resourceId": "sid-8B0FC7C5-DF89-4C56-9148-66A8A5E68123",
         "stencil": {
           "id": "SubProcess"
         },
         "properties": {
           "name_en_us": "Subprocess for Compliance Check",
           "documentation_en_us": "A subprocess to handle detailed compliance
       checks."
         },
         "childShapes": [
           {
             "resourceId": "sid-8B0FC7C5-DF89-4C56-9148-66A8A5E68124",
             "stencil": {
               "id": "Task"
             },
             "properties": {
               "name_en_us": "Detailed Compliance Review",
               "documentation_en_us": "Review compliance with detailed state
      regulations."
             }
           },
           {
             "resourceId": "sid-8B0FC7C5-DF89-4C56-9148-66A8A5E68125",
             "stencil": {
               "id": "Task"
             },
             "properties": {
               "name_en_us": "Approve Compliance",
               "documentation_en_us": "Approve the compliance after review."
             }
           },
           {
             "resourceId": "sid-8B0FC7C5-DF89-4C56-9148-66A8A5E68128",
             "stencil": {
               "id": "EndNoneEvent"
             },
             "properties": {
               "name_en_us": "Compliance Check Completed",
               "documentation_en_us": "End event when the compliance check is
       completed."
             }
           }
         ]
       }
```

### Example 7- Example Implementation

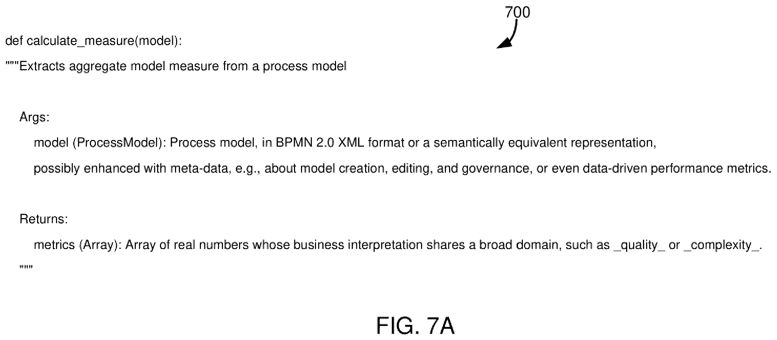

FIGS. 7A-7Y provide example code 700 that can be used in an implementation of disclosed techniques for analyzing process models. In FIG. 7A, a Python function calculate_measure takes one argument, model, which is expected to be a ProcessModel. A ProcessModel is a representation of a process, such as in a BPMN 2.0 XML or JSON format, or a semantically equivalent representation. This model can potentially be enhanced with additional metadata about model creation, editing, and governance, or even data-driven performance metrics.

The calculate_measure function calculates and returns an array of real numbers, representing process model metrics. These metrics are derived from the input process model and, as discussed, are intended to provide a quantitative measure of some broad domain characteristic of the model, such as its quality or complexity. The calculate_measure function can be used for analyzing a single model or a collection of models, and it does not require any specific knowledge about the nature of the process being modeled.

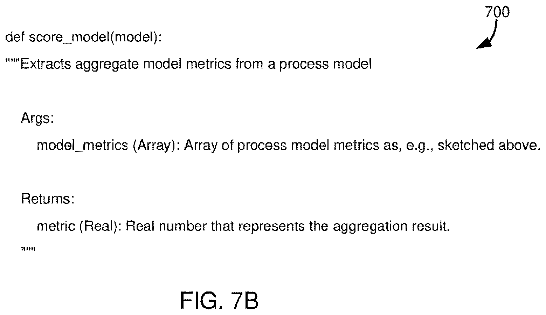

FIG. 7B provides a Python function named score_model. This function calculates an aggregate score from an array of metrics derived from a process model. The function score_model takes one argument, model_metrics, which is expected to be an array of metrics. These metrics can be the output of the previously mentioned calculate_measure function. The purpose of the function is to calculate and return a single real number, representing the aggregate result of the individual metrics.

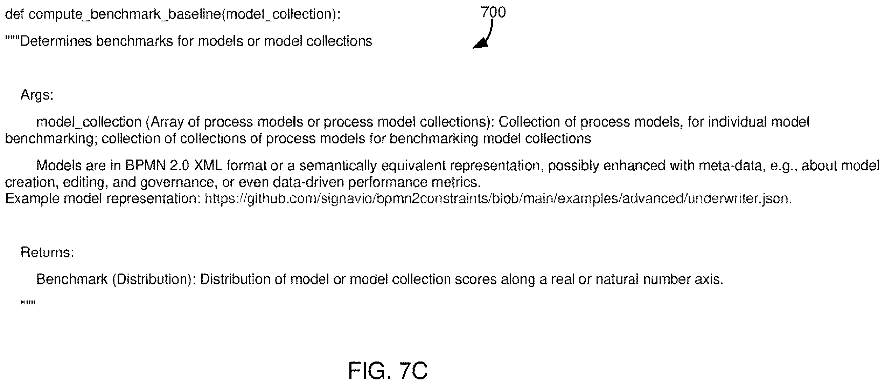

FIG. 7C illustrates a Python function named compute_benchmark_baseline. This function determines benchmarks for either individual models or collections of models. The function compute_benchmark_baseline takes one argument, model_collection, which is expected to be an array of process models or an array of collections of process models, as described. The function calculates and returns a distribution of model or model collection scores along a real or natural number axis, referred to as Benchmark. This distribution represents the benchmark baseline for the given collection of models.

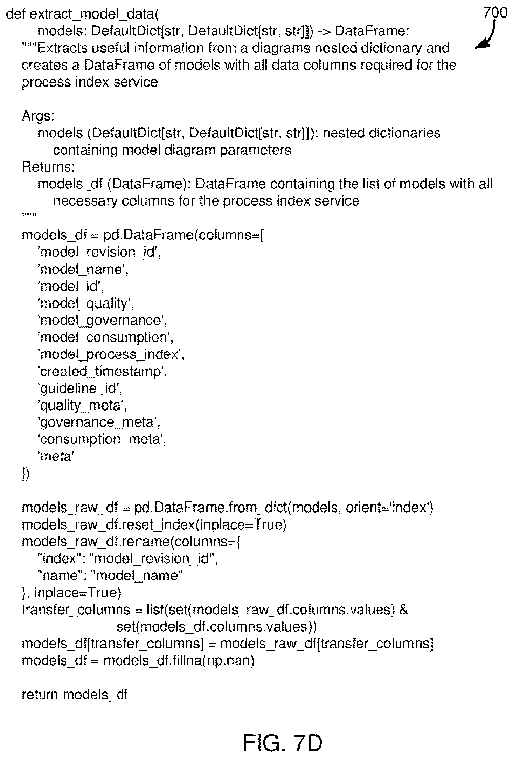

FIG. 7D provides a Python function named extract_model_data. This function extracts information from a nested dictionary of diagrams and creates a DataFrame of models with data columns for a process index service. The function extract_model_data takes one argument, models, which is expected to be a nested dictionary where each key-value pair represents a model diagram parameter.

The function begins by creating an empty DataFrame models_df with specific columns that are required for the process index service. These columns include 'model_revision_id', 'model_name', 'model_id', 'model_quality', 'model_governance', 'model_consumption', 'model_process_index', 'created_timestamp', 'guideline_id', 'quality_meta', 'governance_meta', 'consumption_meta', and 'meta'.

Next, the function creates a DataFrame models_raw_df from the input dictionary models, with the dictionary keys as the DataFrame index. The index is then reset to convert the index into a column of the DataFrame. The function then renames the "index" column to "model_revision_id" and the "name" column to "model_name". After that, the function identifies the columns that are common between models_raw_df and models_df and transfers the data from these columns in models_raw_df to models_df. Finally, any missing values in models_df are filled with null values ("np.nan"), and the DataFrame models_df is returned.

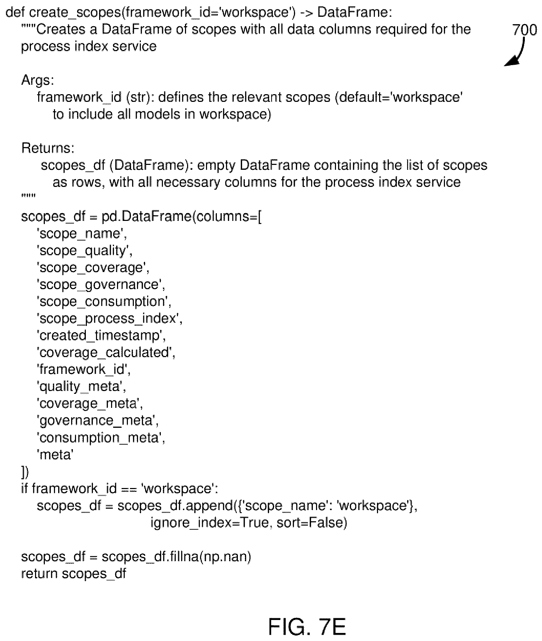

FIG. 7E provides a Python function named create_scopes. This function is designed to create a DataFrame of scopes with all necessary data columns for a process index service. The function create_scopes takes one optional argument, framework_id, which defaults to 'workspace'. This argument defines the relevant scopes for the process index service.

The function begins by creating an empty DataFrame scopes_df with specific columns that are required for the process index service. These columns include 'scope_name', 'scope_quality', 'scope_coverage', 'scope_governance', 'scope_consumption', 'scope_process_index', 'created_timestamp', 'coverage_calculated', 'framework_id', 'quality_meta', 'coverage_meta', 'governance_meta', 'consumption_meta', and 'meta'. If the framework_id is 'workspace', a row is appended to scopes_df with 'scope_name' set to 'workspace'. This effectively creates a scope that includes all models in the workspace. Finally, any missing values in scopes_df are filled with np.nan, and the DataFrame scopes_df is returned.

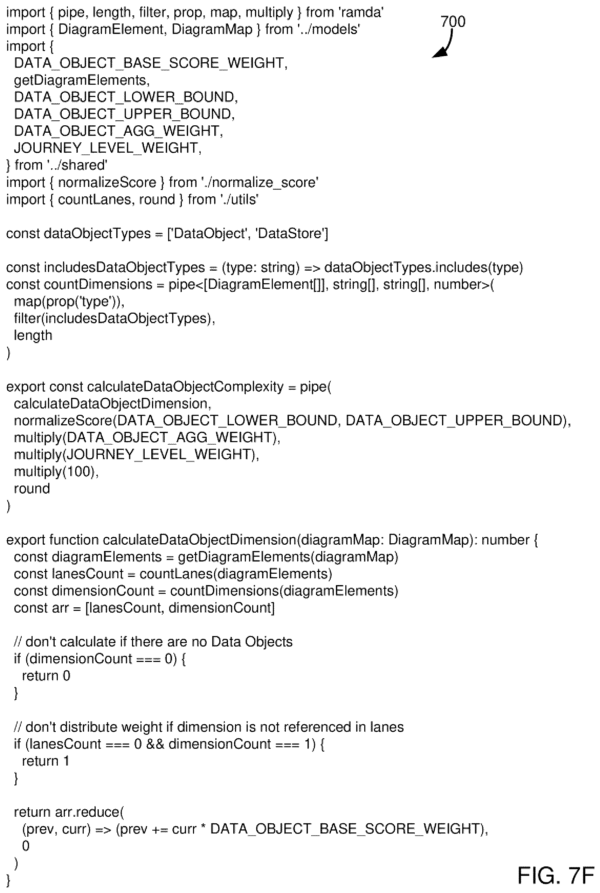

FIG. 7F provides example JavaScript code that calculates the complexity of data objects in a process model. The code uses the Ramda library for functional programming and custom modules for model definitions and shared constants. The code defines several helper functions to count the number of data objects in a diagram and to calculate the dimension of these data objects based on the number of lanes they are referenced in. The main function, calculateDataObjectComplexity, uses these helper functions to calculate the complexity of data objects in a given diagram. The complexity is calculated as a weighted sum of the data object dimension and various constants, and is then normalized to a range between the lower and upper bounds defined in the shared constants.

A constant array dataObjectTypes is defined, which includes the types of diagram elements that are considered to be data objects. A helper function includesDataObjectTypes is defined to check if a given type is included in the dataObjectTypes array.

The function countDimensions is defined using the pipe function from 'Ramda'. This function takes an array of DiagramElement objects, extracts the 'type' property of each element, filters the types to include only those that are considered data objects, and then returns the count of such types.

The function calculateDataObjectComplexity is defined as a composition of several operations on a DiagramMap object. It calculates the data object dimension of the diagram, normalizes the score, multiplies it by several weights, and finally rounds the result.

The function calculateDataObjectDimension is the main function in FIG. 7F. It takes a DiagramMap object as input and calculates a dimension score based on the number of lanes and the number of data objects in the diagram. If there are no data objects, the function returns 0. If there is one data object and no lanes, the function returns 1. Otherwise, the function calculates the score as the sum of the product of the number of lanes and data objects and a base score weight.

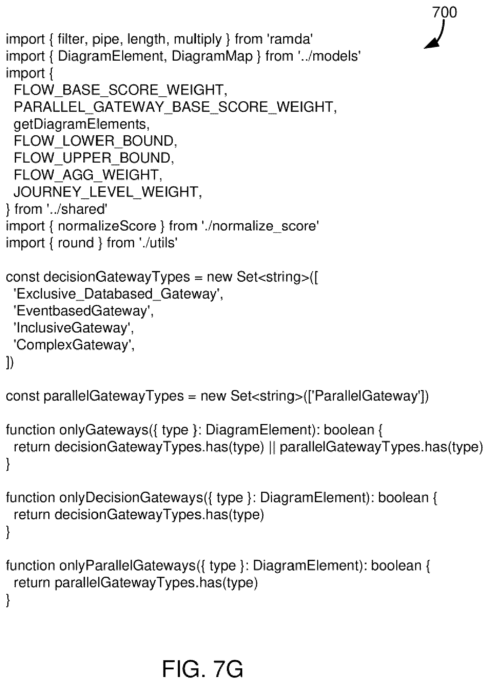

FIG. 7G-7I provide example JavaScript code that calculates the complexity of flows within a process model. The code uses the opensource Ramda library for functional programming and custom modules for model definitions and shared constants. The code defines several helper functions to filter diagram elements based on their type. Specifically, it identifies decision gateways and parallel gateways within the process model. Decision gateways are points in the process where the flow can go down one of several paths, while parallel gateways are points where the flow can go down multiple paths simultaneously. The main function, onlyGateways, checks if a given diagram element is a gateway. This could be either a decision gateway or a parallel gateway.

In FIG. 7G, the code begins by importing several utility functions from the Ramda library, as well as some custom modules and constants. It then defines two sets, decisionGatewayTypes and parallelGatewayTypes. These contain the types of diagram elements that are considered to be decision gateways and parallel gateways, respectively.

To assist the main function, two helper functions are also defined: onlyDecisionGateways and onlyParallelGateways. These functions are used to check if a given diagram element is a decision gateway or a parallel gateway, respectively. They take a DiagramElement object as input and return a Boolean indicating the type of the gateway.

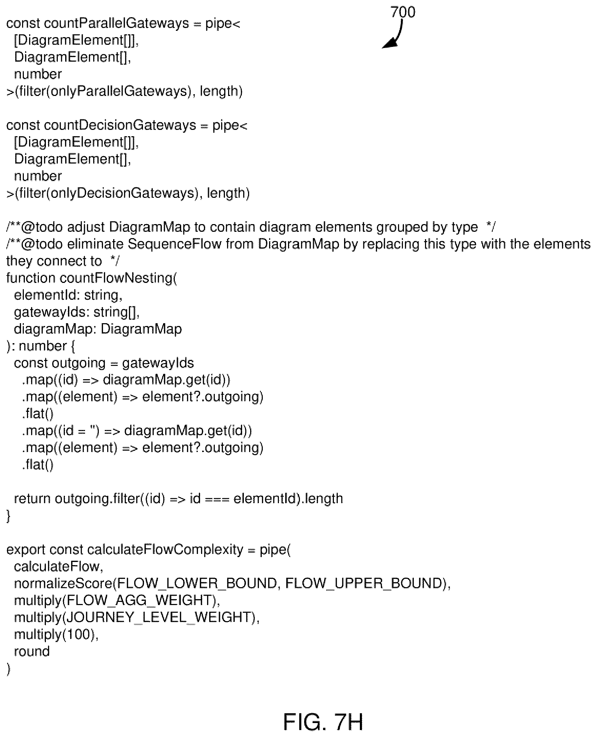

**In** FIG. 7H, the function countParallelGateways is defined using the pipe function from Ramda. This function takes an array of DiagramElement objects, filters the elements to include only those that are parallel gateways, and then returns the count of such elements. The function countDecisionGateways is defined similarly, but filters for decision gateways instead.

The function countFlowNesting takes an element ID, an array of gateway IDs, and a DiagramMap object as input. It calculates the number of outgoing connections from the gateways that lead to the element with the given ID.

Also in FIG. 7H, a function calculateFlowComplexity is defined as a composition of several operations on a DiagramMap object. It calculates the flow of the diagram, normalizes the score, multiplies it by several weights, and finally rounds the result.

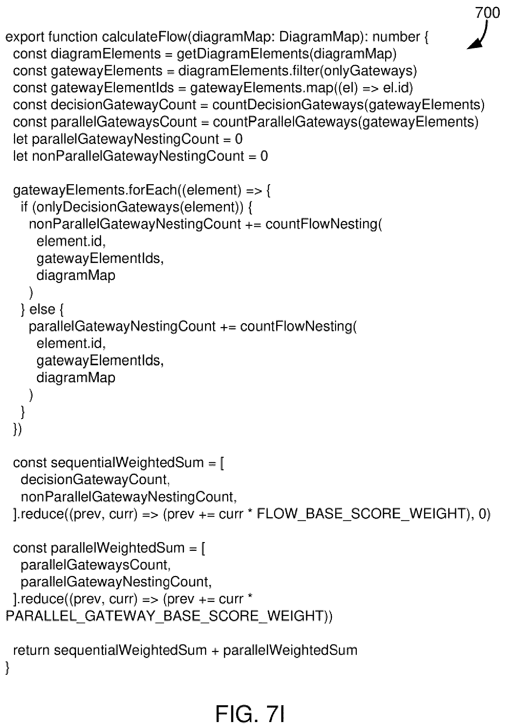

The function calculateFlow in FIG. 7I is the main function used in calculating flow complexity. It takes a DiagramMap object as input and calculates a flow score based on the number of decision gateways, parallel gateways, and their nesting counts in the diagram. The score is calculated as the sum of two weighted sums: one for sequential flows (decision gateways and non-parallel gateway nestings) and one for parallel flows (parallel gateways and parallel gateway nestings).

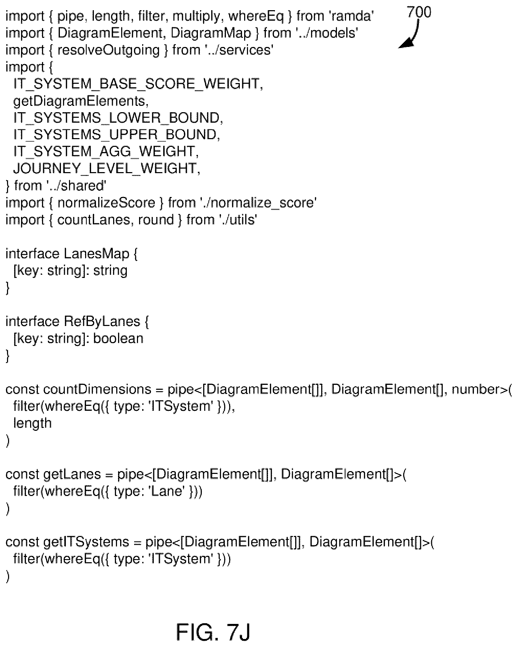

FIGS. 7J-7L provide example JavaScript code that calculates the complexity of IT systems within a process model. The code defines several helper functions to filter diagram elements based on their type and to count the number of IT systems in a diagram. Specifically, it identifies IT systems and lanes within the process model. IT systems are components in a process model that represent information technology resources, while lanes are used in process models to organize and categorize activities.

The main function, countDimensions, uses these helper functions to count the number of IT systems in a given diagram. Other helper functions, getLanes and getITSystems, are used to get arrays of lane elements and IT system elements, respectively.

The code begins by importing several utility functions from the Ramda library, as well as some custom modules and constants. It then defines two interfaces, LanesMap and RefByLanes, which are used to map diagram elements to their corresponding lanes and to keep track of which lanes reference which IT systems, respectively.

Three helper functions are defined: countDimensions, getLanes, and getITSystems. These functions take an array of DiagramElement objects and return the count of IT system elements, an array of lane elements, and an array of IT system elements, respectively.

The function calculateITSystemComplexity is defined as a composition of several operations on a DiagramMap object. It calculates the IT system dimension of the diagram, normalizes the score, multiplies it by several weights, and finally rounds the result.

The function calculateITSystemDimension is the main function in this portion of the code. It takes a DiagramMap object as input and calculates an IT system score based on the number of IT systems and their references in the diagram. The score is calculated as the sum of the product of the number of references and a base score weight.

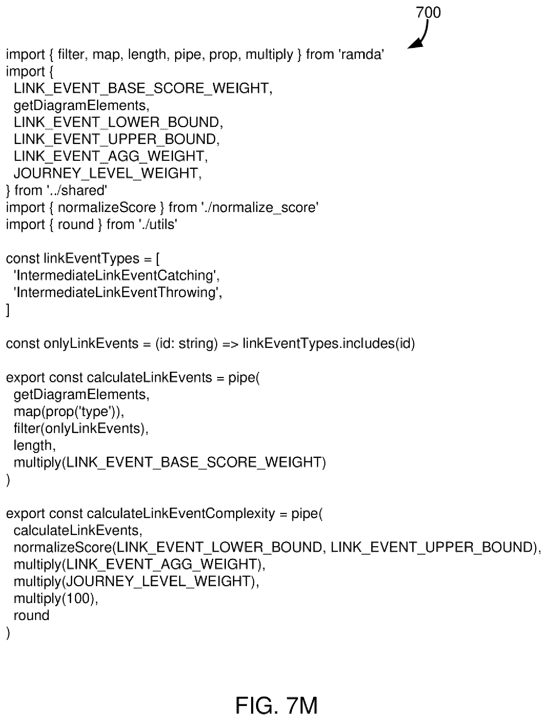

FIG. 7M provides example JavaScript code that calculates the complexity of link events within a process model. The code defines several helper functions to filter diagram elements based on their type and to count the number of link events in a diagram. Specifically, the code identifies link events within the process model. Link events are components in a process model that represent a mechanism for connecting two separate sections of a process.

The main function, calculateLinkEvents, uses these helper functions to count the number of link events in a given diagram. The function calculateLinkEventComplexity is defined as a composition of several operations on a DiagramMap object. It calculates the link events of the diagram, normalizes the score, multiplies it by several weights, and finally rounds the result.

The first part of the code calculates the complexity of link events in a process model. It begins by defining an array linkEventTypes that includes the types of diagram elements that are considered to be link events. A helper function onlyLinkEvents is defined to check if a given type is included in the linkEventTypes array. The function calculateLinkEvents is defined using the pipe function from Ramda. This function takes an array of DiagramElement objects, extracts the "type" property of each element, filters the types to include only those that are link events, and then returns the count of such types multiplied by a base score weight. The function calculateLinkEventComplexity is defined as a composition of several operations on a DiagramMap object. It calculates the link events of the diagram, normalizes the score, multiplies it by several weights, and finally rounds the result.

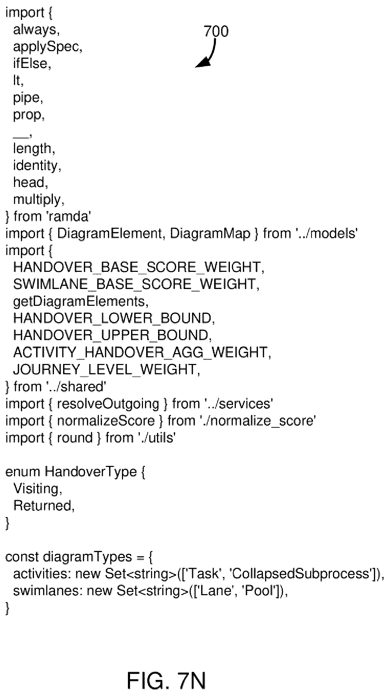

FIGS. 7N-7Q provide example JavaScript code that calculates the complexity of handovers within a process model. The code defines several helper functions to filter diagram elements based on their type and to count the number of handovers in a diagram. Specifically, the code identifies activities and swimlanes within the process model. Activities are components in a process model that represent tasks or subprocesses, while swimlanes are used in process models to organize and categorize activities.

The main function, calculateProcessHandover, uses these helper functions to calculate the handover of a given diagram. The handover is calculated based on the number of lanes with activities and the number of handovers, each multiplied by a base score weight. The function calculateProcessHandoverComplexity is defined as a composition of several operations on a DiagramMap object. It calculates the handover of the diagram, normalizes the score, multiplies it by several weights, and finally rounds the result.

The second part of the code calculates the complexity of handovers in a process model. It defines an enum HandoverType and two sets activities and swimlanes in the diagramTypes object, which contain the types of diagram elements that are considered to be activities and swimlanes, respectively. Several helper functions are defined to filter and count these elements. The function calculateHandoverCount calculates the number of handovers between activities in different lanes. The function calculateProcessHandover calculates a handover score based on the number of lanes with activities and the number of handovers, each multiplied by a base score weight. The function calculateProcessHandoverComplexity is defined as a composition of several operations on a DiagramMap object. It calculates the handover of the diagram, normalizes the score, multiplies it by several weights, and finally rounds the result.

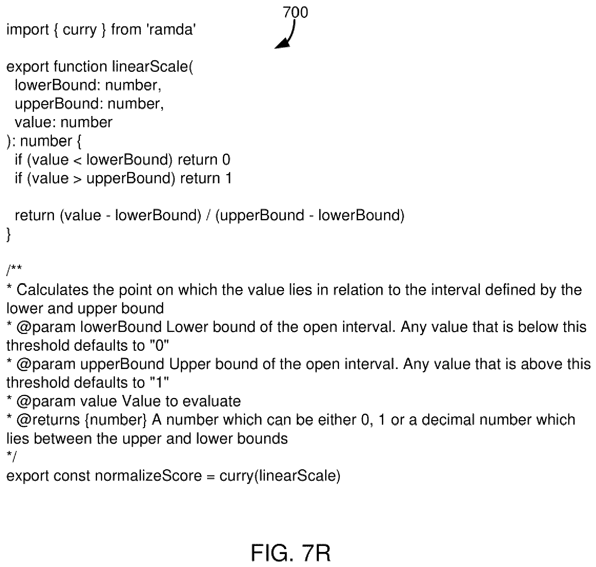

FIG. 7R provides example JavaScript code that implements a normalization function for numerical values. This code provides a way to normalize scores and calculate quality scores for process models, and could be used as part of a larger system for benchmarking process models.

The JavaScript code defines a function linearScale that takes a lower bound, an upper bound, and a value. It returns 0 if the value is less than the lower bound, 1 if the value is greater than the upper bound, and otherwise it returns the normalized value calculated as the difference between the value and the lower bound divided by the difference between the upper and lower bounds. This function is used to normalize a score to a range between 0 and 1. The function normalizeScore is a curried version of linearScale, which means it can be partially applied with one or two arguments, and then called later with the remaining arguments.

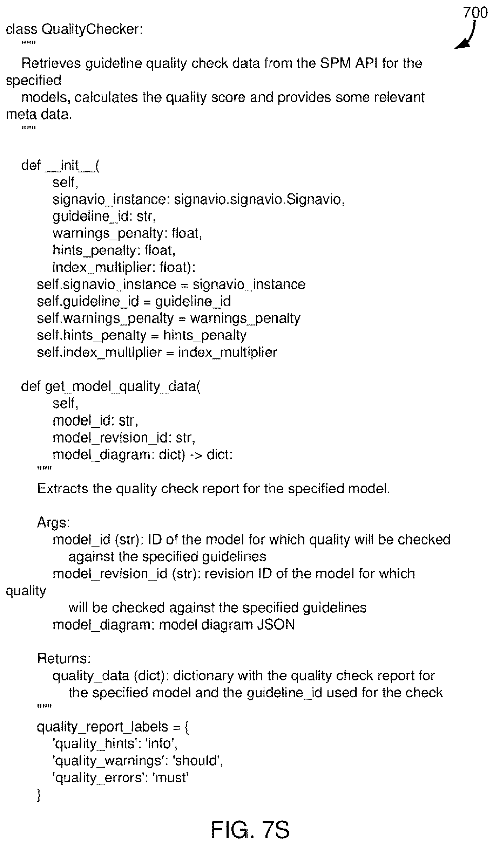

FIGS. 7S-7U provide example Python code that defines a QualityChecker class. This class retrieves guideline quality check data from the SPM API for specified models, calculates the quality score, and provides some relevant metadata. The class includes methods for initializing an instance of the class with specific parameters, and for extracting the quality check report for a specified model.

The method get_model_quality_data extracts the quality check report for a specified model. It takes the model ID, model revision ID, and model diagram as input, and returns a dictionary with the quality check report for the specified model and the guideline ID used for the check.

The method calculate_model_quality_score extracts the quality check report and calculates the quality score for a specified model. It takes a single DataFrame row with the necessary columns as input, and returns a Series with generated data for the 'guideline_id', 'quality_hints', 'quality_warnings', 'quality_errors', and 'quality_score' columns.

The method get_quality_scores fetches the quality check data and calculates the quality scores for all models in the specified DataFrame. It takes a DataFrame containing information for all models in the DataFrame as input, and returns a DataFrame with calculated quality scores for the models in the DataFrame and additional columns for the model quality check information.

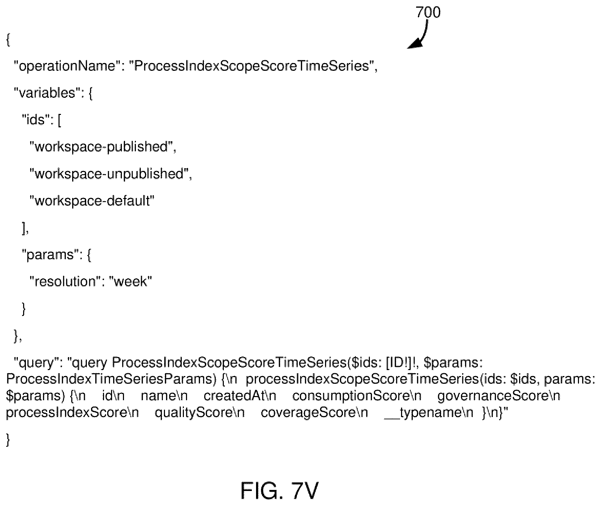

FIGS. 7V-7X provide example JSON objects for a GraphQL request and its corresponding response. The request is asking for a time series of scores for a set of scopes (in this case, "workspace-published", "workspace-unpublished", and "workspace-default") with a resolution of "week". The scores requested include the consumption score, governance score, process index score, quality score, and coverage score.

The response contains the requested data for each scope. Each scope's data includes its ID, name, creation timestamp, and the various scores. The scores are returned as arrays, such as an array with one entry for each week in the time series.

For example, for the scope with the ID "workspace-published", the response includes the creation timestamps, consumption scores, governance scores, process index scores, quality scores, and coverage scores for each week. The same data is returned for the other scopes as well. This data can be used to track the performance of each scope over time, identify trends, and make comparisons between different scopes.

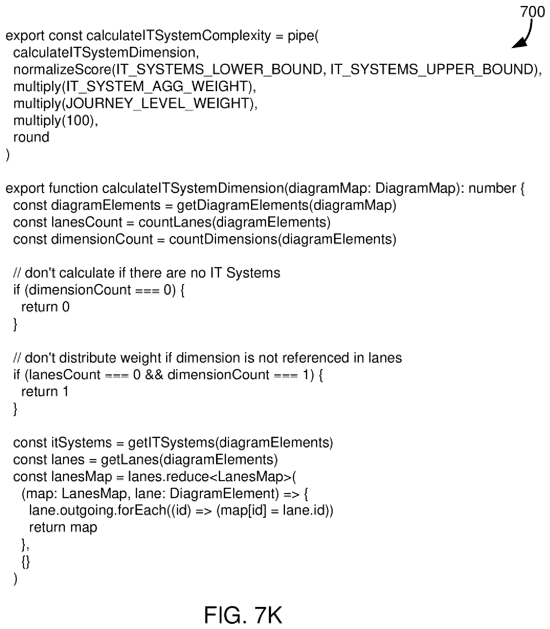

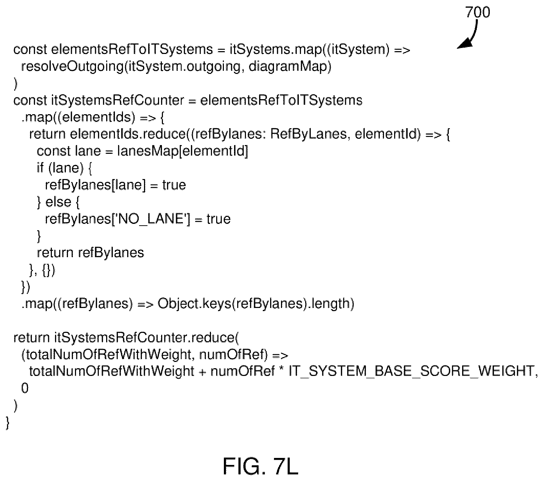

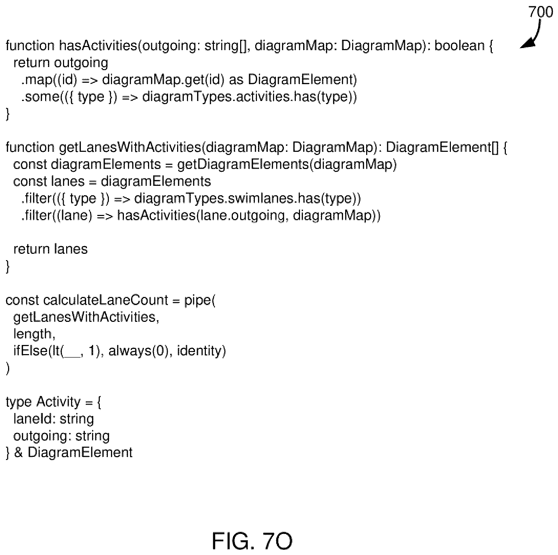

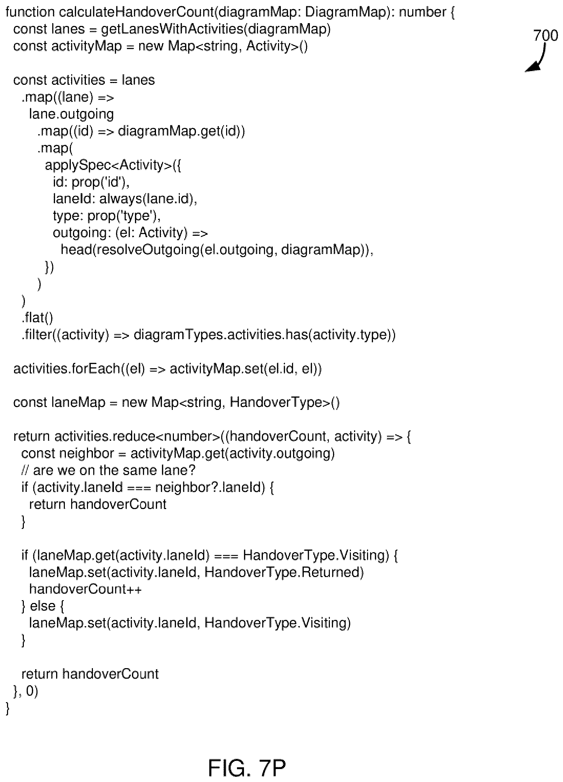

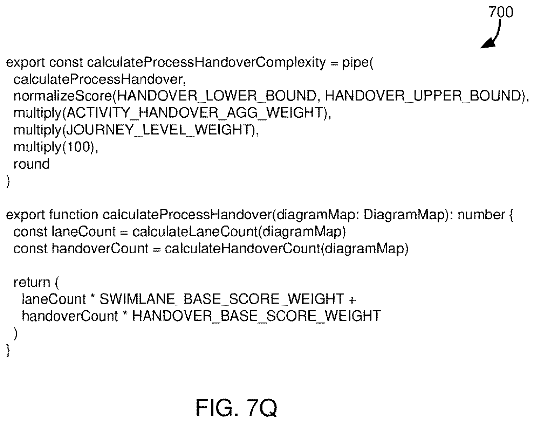

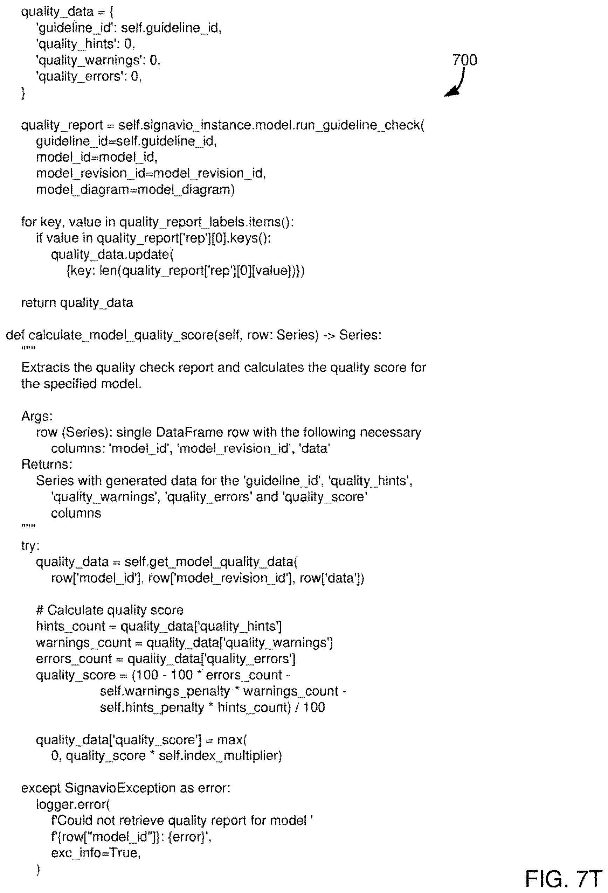

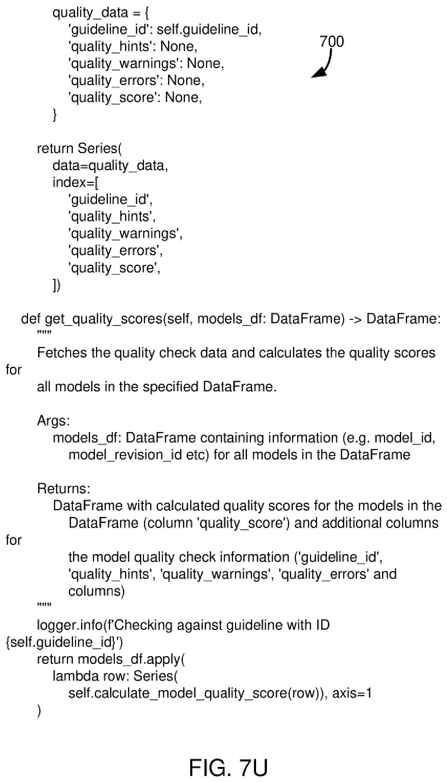

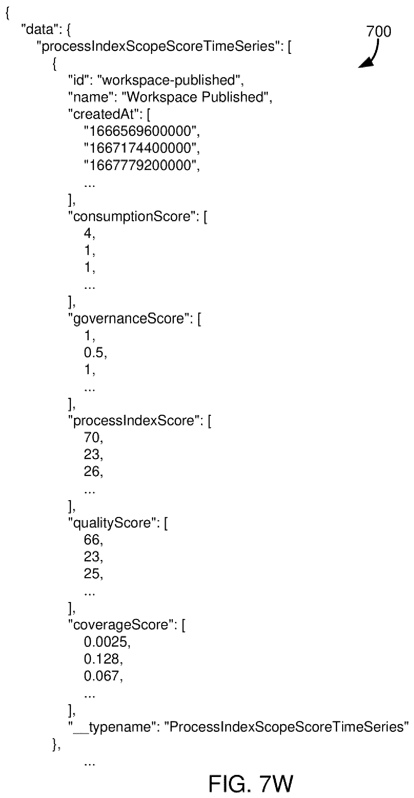

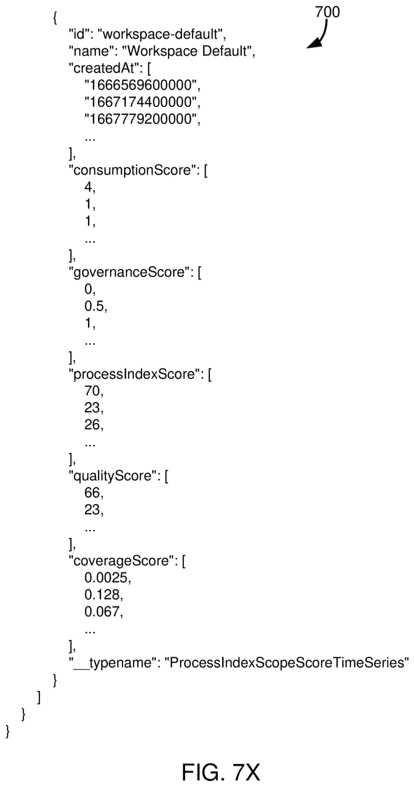

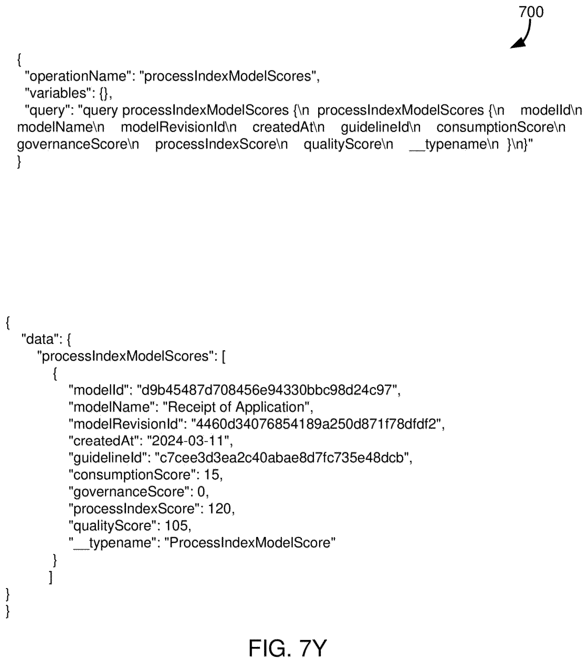

FIG. 7Yprovides example code 700 for a GraphQL request and its corresponding response. The request is specifically asking for a variety of scores related to process models. The scores requested include the modelId, modelName, modelRevisionId, createdAt, guidelineId, consumptionScore, governanceScore, processIndexScore, and qualityScore.

The response to this request contains the requested data for each model. Each model's data includes its modelId, modelName, modelRevisionId, createdAt, guidelineId, and the various scores. For instance, for the model with the ID d9b45487d708456e94330bbc98d24c97 and the name Receipt of Application, the response includes the creation timestamp, guideline ID, consumption score, governance score, process index score, and quality score.

This data can be used to track the performance of each model, identify trends, and make comparisons between different models. For example, the consumptionScore can be used to understand how frequently a model is being used, or the governanceScore can be used to assess how well the model adheres to certain guidelines. The processIndexScore and qualityScore provide a general measure of the model's effectiveness and quality.

### Example 8- Example Display of Process Model Analysis Results

Information regarding process models obtained using disclosed techniques can be presented to users in a variety of ways, including the report 400 of FIG. 4. Information regarding model or model collections metrics, aggregated scores, benchmarks, or performance indicators (including with benchmark comparisons) can also be provided in a display of the process model, such the process model 500 of FIG. 5.

Referring back to FIG. 5, an indicator 510a can display, or can be selected to display, information such as a time taken from the start of the approval process to a final result of stock being offered to the public or the process being aborted, as shown in user interface element 512, which also includes a benchmark for best-in-class organizations.

More granular information can be provided, such as indicator 510b, which can include information such as time taken to prepare a registration statement or number of registration statements prepared over a time period. Similarly, indicator 510c can display information such as number of contracts completed, while indicator 510d can display information such as time taken from the start of the approval process to stock issuance, or information regarding a percentage of executions of the process 500 resulting in stock issuance.

A display of the process model 500 can also incorporate information provided in the report 400.

### Example 9- Example Operations

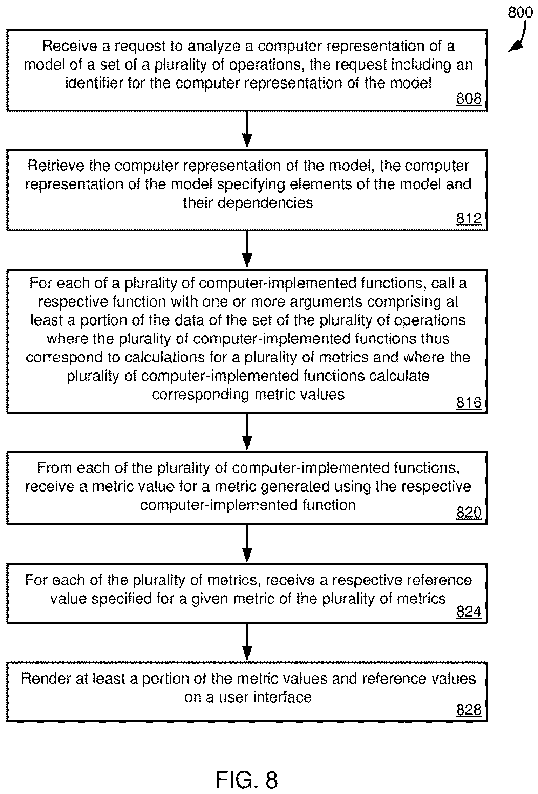

FIG. 8 provides a flowchart of a process 800 for comparing metric values determined for a model of set of operations (such as a process model schema) with reference metric values. At 808, a request is received to analyze a computer representation of a model of a set of a plurality of operations. The request includes an identifier for the computer representation of the model. A computer representation of the model is retrieved at 812. The computer representation of the model specifies elements of the model and their dependencies.

At 816, for each of a plurality of computer-implemented functions, a respective function is called with one or more arguments that include at least a portion of the data of the set of the plurality of operations. The plurality of computer-implemented functions thus correspond to calculations for a plurality of metrics and where the plurality of computer-implemented functions calculate corresponding metric values.

From each of the plurality of computer-implemented functions, at 820, a metric value for a metric generated using the respective computer-implemented function is received. At 824, for each of the plurality of metrics, a respective reference value specified for a given metric of the plurality of metrics is received. At least a portion of the metric values and reference values are rendered on a user interface at 828.

### Example 10- Additional Examples

Example 1 provides a computing system that includes at least one memory, one or more hardware processing units coupled to the at least one memory, and one or more computer-readable storage media storing computer-executable instructions. When executed, these computer-executable instructions cause the computing system to perform operations. These operations include receiving a request to analyze a computer representation of a model of a set of a plurality of operations. The request includes an identifier for the computer representation of the model. The computer representation of the model is retrieved, which specifies elements of the model and their dependencies.

For each of a plurality of computer-implemented functions, a respective function is called with one or more arguments that include at least a portion of the data of the set of the plurality of operations. The plurality of computer-implemented functions thus correspond to calculations for a plurality of metrics and calculate corresponding metric values. From each of the plurality of computer-implemented functions, a metric value is retrieved for a metric generated using the respective computer-implemented function. For each of the plurality of metrics, a respective reference value specified for a given metric of the plurality of metrics is retrieved. At least a portion of the metric values and reference values are rendered on a user interface.

Example 2 is the computing system of Example 1, where the set of a plurality of operations is a first set of a plurality of operations and at least one respective reference value is for a semantically equivalent model of a second set of a plurality of operations, where the semantically equivalent model has an output that is identical to an output of the model.

Example 3 is the computing system of Example 1 or Example 2, further including operations of extracting at least a portion of the elements of the model and dependency information from data of the computer representation of the model.

Example 4 is the computing system of any Example 1 or Example 3, where the set of a plurality of operations is a first set of a plurality of operations and at least one respective reference value is for a semantically non-equivalent model of a second set of a plurality of operations.

Example 5 is the computing system of Example 4, wherein the semantically non-equivalent model does not have an output that is an output of the model.

Example 6 is the computing system of any of Examples 1-5, further including operations of calculating an aggregate score using multiple metric values; retrieving a reference aggregate score; and rendering the aggregate score and the reference aggregate score on the user interface.

Example 7 is the computing system of any of Examples 1-6, where the user interface is a first user interface. The operations further include receiving a request to analyze a collection of a plurality of models of respective sets of a plurality of operations. The collection includes the computer representation of a model. The request is the request to analyze a model of the set of the plurality of operations or a different request.

For each model of the set of the plurality of operations in the collection, metric values for multiple metrics associated with the respective computer-implemented functions are received. For respective metrics of the multiple metrics, respective aggregated metric values are calculated using the metric values for the multiple metrics associated with the respective computer-implemented functions for each model of the collection. For each of the plurality of metrics, a respective aggregated reference score specified for a given metric of the plurality of metrics is received. At least a portion of the aggregated metric values with the corresponding aggregated reference scores are rendered on a second user interface. The second user interface is the first user interface or a different user interface.

Example 8 is the computing system of Example 7, further including operations of calculating an aggregate model collection score using the respective aggregated metric values; receiving a reference model collection aggregate score; and rendering the aggregate score and the reference model collection aggregate score on a third user interface. The third user interface is the first user interface, the second user interface, or a different user interface.

Example 9 is the computing system of Example 7 or Example 8, where the models of the set of the plurality of operations of the collection are arranged by model granularity, where a more granular model includes multiple operations that are used to implement an operation of a less granular model.

Example 10 is the computing system of any of Examples 1-9, further including operations of receiving at least one performance metric value for a performance metric for the model of the set of the plurality of operations; receiving at least one reference performance metric value for the at least one performance metric; and rendering the at least one performance metric for the model of the set of the plurality of operations and the at least one reference performance metric for the at least one performance metric on the user interface.

Example 11 is the computing system of any of Examples 1-10, further including operations of receiving user input modifying at least one element or element relationship of the computer representation of the model; and modifying the computer representation of the model according to the user input.

Example 12 provides a method, implemented in a computing system that includes at least one hardware processor and at least one memory coupled to the at least one hardware processor. The method includes receiving a request to analyze a computer representation of a model of a set of a plurality of operations. The request includes an identifier for the computer representation of the model. The method further includes retrieving the computer representation of the model, which specifies elements of the model and their dependencies.

For each of a plurality of computer-implemented functions, the method calls a respective function with one or more arguments comprising at least a portion of the data of the set of the plurality of operations. The plurality of computer-implemented functions thus correspond to calculations for a plurality of metrics and calculate corresponding metric values. From each of the plurality of computer-implemented functions, the method receives a metric value for a metric generated using the respective computer-implemented function. For each of the plurality of metrics, the method receives a respective reference value specified for a given metric of the plurality of metrics. The method renders at least a portion of the metric values and reference values on a user interface.

Example 13 is the method of Example 12, where the set of a plurality of operations is a first set of a plurality of operations and at least one respective reference value is for a semantically equivalent model of a second set of a plurality of operations. The semantically equivalent model has an output that is identical to an output of the model.

Example 14 is the method of Example 12 or Example 13, further including extracting at least a portion of the elements of the model and dependency information from data of the computer representation of the model.

Example 15 is the method of Example 12 or Example 14, where the set of a plurality of operations is a first set of a plurality of operations and at least one respective reference value is for a semantically non-equivalent model of a second set of a plurality of operations. The semantically non-equivalent model does not have an output that is an output of the model.

Example 16 is the method of any of Examples 12-15, further including receiving a request to analyze a collection of a plurality of models of respective sets of a plurality of operations. The collection includes the computer representation of a model. The request is the request to analyze a model of the set of the plurality of operations or a different request. For each model of the set of the plurality of operations in the collection, the method receives metric values for multiple metrics associated with the respective computer-implemented functions. For respective metrics of the multiple metrics, the method calculates respective aggregated metric values using the metric values for the multiple metrics associated with the respective computer-implemented functions for each model of the collection. For each of the plurality of metrics, the method receives a respective aggregated reference score specified for a given metric of the plurality of metrics. The method renders at least a portion of the aggregated metric values with the corresponding aggregated reference scores on a second user interface. The second user interface is the first user interface or a different user interface.

Example 17 provides one or more computer-readable storage media that include computer-executable instructions. When executed by a computing system that includes at least one hardware processor and at least one memory coupled to the at least one hardware processor, these instructions cause the computing system to receive a request to analyze a computer representation of a model of a set of a plurality of operations. The request includes an identifier for the computer representation of the model. The instructions further cause the computing system to retrieve the computer representation of the model, which specifies elements of the model and their dependencies.

For each of a plurality of computer-implemented functions, the instructions cause the computing system to call a respective function with one or more arguments comprising at least a portion of the data of the set of the plurality of operations. The plurality of computer-implemented functions thus correspond to calculations for a plurality of metrics and calculate corresponding metric values. From each of the plurality of computer-implemented functions, the instructions cause the computing system to receive a metric value for a metric generated using the respective computer-implemented function. For each of the plurality of metrics, the instructions cause the computing system to receive a respective reference value specified for a given metric of the plurality of metrics. The instructions cause the computing system to render at least a portion of the metric values and reference values on a user interface.

Example 18 is the one or more computer-readable storage media of Example 17, where the set of a plurality of operations is a first set of a plurality of operations and at least one respective reference value is for a semantically equivalent model of a second set of a plurality of operations. The semantically equivalent model has an output that is identical to an output of the model.

Example 19 is the one or more computer-readable storage media of Example 17, where the set of a plurality of operations is a first set of a plurality of operations and at least one respective reference value is for a semantically non-equivalent model of a plurality of operations. The semantically non-equivalent model does not have an output that is an output of the model.

Example 20 is the one or more computer-readable storage media of any of Examples 17-19, further including computer-executable instructions that, when executed by the computing system, cause the computing system to receive a request to analyze a collection of a plurality of models of respective sets of a plurality of operations. The collection includes the computer representation of a model. The request is the request to analyze a model of the set of the plurality of operations or a different request.

For each model of the set of the plurality of operations in the collection, the instructions cause the computing system to receive metric values for multiple metrics associated with the respective computer-implemented functions. For respective metrics of the multiple metrics, the instructions cause the computing system to calculate respective aggregated metric values using the metric values for the multiple metrics associated with the respective computer-implemented functions for each model of the collection. For each of the plurality of metrics, the instructions cause the computing system to receive a respective aggregated reference score specified for a given metric of the plurality of metrics. The instructions cause the computing system to render at least a portion of the aggregated metric values with the corresponding aggregated reference scores on a second user interface. The second user interface is the first user interface or a different user interface.

### Example 11 - Computing Systems

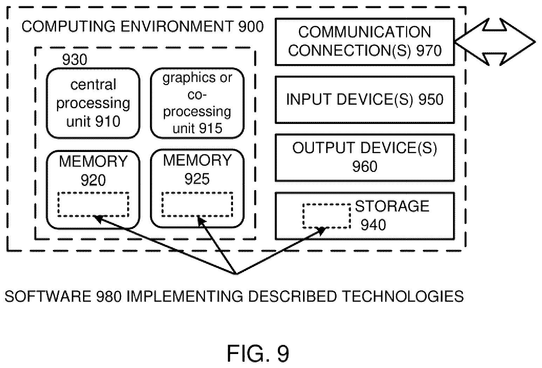

FIG. 9 depicts a generalized example of a suitable computing system 900 in which the described innovations may be implemented. The computing system 900 is not intended to suggest any limitation as to scope of use or functionality of the present disclosure, as the innovations may be implemented in diverse general-purpose or special-purpose computing systems.

With reference to FIG. 9, the computing system 900 includes one or more processing units 910, 915 and memory 920, 925. In FIG. 9, this basic configuration 930 is included within a dashed line. The processing units 910, 915 execute computer-executable instructions, such as for implementing technologies described in Examples 1-10. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 9 shows a central processing unit 910 as well as a graphics processing unit or co-processing unit 915. The tangible memory 920, 925 may be volatile memory (e.g., registers, cache, RAM), non-volatile memory (e.g., ROM, EEPROM, flash memory, etc.), or some combination of the two, accessible by the processing unit(s) 910, 915. The memory 920, 925 stores software 980 implementing one or more innovations described herein, in the form of computer-executable instructions suitable for execution by the processing unit(s) 910, 915.

A computing system 900 may have additional features. For example, the computing system 900 includes storage 940, one or more input devices 950, one or more output devices 960, and one or more communication connections 970. An interconnection mechanism (not shown) such as a bus, controller, or network interconnects the components of the computing system 900. Typically, operating system software (not shown) provides an operating environment for other software executing in the computing system 900, and coordinates activities of the components of the computing system 900.

The tangible storage 940 may be removable or non-removable, and includes magnetic disks, magnetic tapes or cassettes, CD-ROMs, DVDs, or any other medium which can be used to store information in a non-transitory way, and which can be accessed within the computing system 900. The storage 940 stores instructions for the software 980 implementing one or more innovations described herein.

The input device(s) 950 may be a touch input device such as a keyboard, mouse, pen, or trackball, a voice input device, a scanning device, or another device that provides input to the computing system 900. The output device(s) 960 may be a display, printer, speaker, CD-writer, or another device that provides output from the computing system 900.

The communication connection(s) 970 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 12 - Cloud Computing Environment

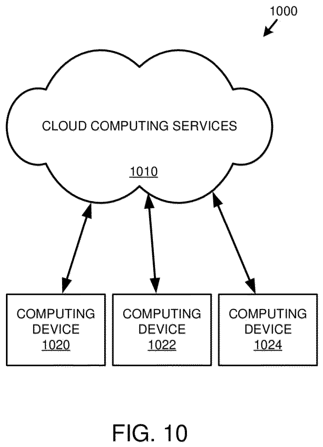

FIG. 10 depicts an example cloud computing environment 1000 in which the described technologies can be implemented. The cloud computing environment 1000 comprises cloud computing services 1010. The cloud computing services 1010 can comprise various types of cloud computing resources, such as computer servers, data storage repositories, networking resources, etc. The cloud computing services 1010 can be centrally located (e.g., provided by a data center of a business or organization) or distributed (e.g., provided by various computing resources located at different locations, such as different data centers and/or located in different cities or countries).

The cloud computing services 1010 are utilized by various types of computing devices (e.g., client computing devices), such as computing devices 1020, 1022, and 1024. For example, the computing devices (e.g., 1020, 1022, and 1024) can be computers (e.g., desktop or laptop computers), mobile devices (e.g., tablet computers or smart phones), or other types of computing devices. For example, the computing devices (e.g., 1020, 1022, and 1024) can utilize the cloud computing services 1010 to perform computing operators (e.g., data processing, data storage, and the like).

### Example 13 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 9, computer-readable storage media include memory 920 and 925, and storage 940. The term computer-readable storage media does not include signals and carrier waves. In addition, the term computer-readable storage media does not include communication connections (e.g., 970).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A method, implemented in a computing system comprising at least one hardware processor and at least one memory coupled to the at least one hardware processor, the method comprising:
receiving a request to analyze a computer representation of a model of a set of a plurality of operations, the request comprising an identifier for the computer representation of the model;
retrieving the computer representation of the model, the computer representation of the model specifying elements of the model and their dependencies;
for each of a plurality of computer-implemented functions, calling a respective function with one or more arguments comprising at least a portion of the data of the set of the plurality of operations wherein the plurality of computer-implemented functions thus correspond to calculations for a plurality of metrics and where the plurality of computer-implemented functions calculate corresponding metric values;
from each of the plurality of computer-implemented functions, receiving a metric value for a metric generated using the respective computer-implemented function;
for each of the plurality of metrics, receiving a respective reference value specified for a given metric of the plurality of metrics; and
rendering at least a portion of the metric values and reference values on a user interface.

2. The method of claim 1, wherein the set of a plurality of operations is a first set of a plurality operations and at least one respective reference value is for a semantically equivalent model of a second set of a plurality of operations, wherein the semantically equivalent model has an output that is identical to an output of the model.

3. The method of claim 1 or 2, further comprising:
from data of the computer representation of the model, extracting at least a portion of the elements of the model and dependency information.

4. The method of claim 1 or 3, wherein the set of a plurality of operations is a first set of a plurality operations and at least one respective reference value is for a semantically non-equivalent model of a second set of a plurality of operations.

5. The method of claim 4, wherein the semantically non-equivalent model does not have an output that is an output of the model.

6. The method of any one of claims 1 to 5, further comprising:
calculating an aggregate score using multiple metric values;
retrieving a reference aggregate score; and
rendering the aggregate score and the reference aggregate score on the user interface.

7. The method of any one of claims 1 to 6, wherein the user interface is a first user interface, further comprising:
receiving a request to analyze a collection of a plurality of models of respective sets of a plurality of operations, the collection comprising the computer representation of a model, the request being the request to analyze a model of the set of the plurality of operations or a different request;
for each model of the set of the plurality of operations in the collection, receiving metric values for multiple metrics associated with the respective computer-implemented functions;
for respective metrics of the multiple metrics, calculating respective aggregated metric values using the metric values for the multiple metrics associated with the respective computer-implemented functions for each model of the collection;
for each of the plurality of metrics, receiving a respective aggregated reference score specified for a given metric of the plurality of metrics; and
rendering at least a portion of the aggregated metric values with the corresponding aggregated reference scores on a second user interface, wherein the second user interface is the first user interface or is different than the first user interface.

8. The method of claim 7, further comprising:
calculating an aggregate model collection score using the respective aggregated metric values;
receiving a reference model collection aggregate score; and
rendering the aggregate score and the reference model collection aggregate score on a third user interface.

9. The method of claim 7 or 8, wherein the models of the set of the plurality of operations of the collection are arranged by model granularity, where a more granular model comprises multiple operations that are used to implement an operation of a less granular model.

10. The method of any one of claims 1 to 9, further comprising:
receiving at least one performance metric value for a performance metric for the model of the set of the plurality of operations;
receiving at least reference performance metric value for the at least one performance metric; and
rendering the at least one performance metric for the model of the set of the plurality of operations and the at least one reference performance metric for the at least one performance metric on the user interface.

11. The method of any one of claims 1 to 10, further comprising:
receiving user input modifying at least one element or element relationship of the computer representation of the model; and
modifying the computer representation of the model according to the user input.

12. A computing system comprising:
at least one memory;
one or more hardware processing units coupled to the at least one memory; and
one or more computer readable storage media storing computer-executable instructions that, when executed, cause the computing system to perform operations comprising:
receiving a request to analyze a computer representation of a model of a set of a plurality of operations, the request comprising an identifier for the computer representation of the model;
retrieving the computer representation of the model, the computer representation of the model specifying elements of the model and their dependencies;
for each of a plurality of computer-implemented functions, calling a respective function with one or more arguments comprising at least a portion of the data of the set of the plurality of operations wherein the plurality of computer-implemented functions thus correspond to calculations for a plurality of metrics and where the plurality of computer-implemented functions calculate corresponding metric values;
from each of the plurality of computer-implemented functions, receiving a metric value for a metric generated using the respective computer-implemented function;
for each of the plurality of metrics, receiving a respective reference value specified for a given metric of the plurality of metrics; and
rendering at least a portion of the metric values and reference values on a user interface.

13. The computing system of claim 12, further performing operations according to the method of any one of claims 2 to 11.

14. One or more computer-readable storage media comprising:
computer-executable instructions that, when executed by a computing system comprising at least one hardware processor and at least one memory coupled to the at least one hardware processor, cause the computing system to receive a request to analyze a computer representation of a model of a set of a plurality of operations, the request comprising an identifier for the computer representation of the model;
computer-executable instructions that, when executed by the computing system, cause the computing system to retrieve the computer representation of the model, the computer representation of the model specifying elements of the model and their dependencies;
computer-executable instructions that, when executed by the computing system, cause the computing system to, for each of a plurality of computer-implemented functions, call a respective function with one or more arguments comprising at least a portion of the data of the set of the plurality of operations wherein the plurality of computer-implemented functions thus correspond to calculations for a plurality of metrics and where the plurality of computer-implemented functions calculate corresponding metric values;
computer-executable instructions that, when executed by the computing system, cause the computing system to, from each of the plurality of computer-implemented functions, receive a metric value for a metric generated using the respective computer-implemented function;
computer-executable instructions that, when executed by the computing system, cause the computing system to, for each of the plurality of metrics, receive a respective reference value specified for a given metric of the plurality of metrics; and
computer-executable instructions that, when executed by the computing system, cause the computing system to render at least a portion of the metric values and reference values on a user interface.

15. The one or more computer-readable storage media of claim 14, further comprising computer-executable instructions that cause the computing system to perform the method of any one of claims 2 to 11.
